# FASCICULE DE BREVET EUROPEEN

(11) **EP 3 302 911 B1**
(45) Date de publication et mention de la délivrance du brevet: **07.08.2019**
(21) Numéro de dépôt: 16734422.5
(22) Date de dépôt: 07.06.2016
(51) Int. Cl.: B29C 31/04, B29B 11/08, B29C 43/34, B29C 43/08, B29C 45/04, B29C 45/22, B29K 67/00, B29L 31/00

(54) **DISPOSITIF DE DISTRIBUTION DE MATIERE THERMOPLASTIQUE COMPORTANT DES MOYENS D'ETANCHEITE PERFECTIONNES**
VORRICHTUNG MIT VERBESSERTEN DICHTUNGSMITTELN ZUR VERTEILUNG VON THERMOPLASTISCHEM MATERIAL
DEVICE FOR DISTRIBUTING THERMOPLASTIC MATERIAL, COMPRISING IMPROVED SEALING MEANS

(30) Priorité: 08.06.2015 FR 1555203
(43) Date de publication de la demande: 11.04.2018
(73) Titulaire: Sidel Participations, 76930 Octeville-sur-Mer (FR)
(72) Inventeur: DUCLOS, Yves-Alban, 76930 Octeville-sur-mer (FR); CARDINE, Denis, 76930 Octeville-sur-mer (FR); LAMARE, Olivier, 76930 Octeville-sur-mer (FR)
(74) Mandataire: Grassin d'Alphonse, Emmanuel Jean Marie
(86) Numéro de dépôt international: PCT/FR2016/051350
(87) Numéro de publication internationale: WO 2016/198774

(56) Documents cités:
- CA-A1- 2 898 689
- SU-A1- 1 599 221
- US-B2- 7 001 168
- US-B2- 8 858 216

## Description

La présente invention concerne un dispositif de distribution de matière thermoplastique comportant des moyens d'étanchéité perfectionnés.

La présente invention concerne plus particulièrement un dispositif de distribution de matière thermoplastique à une machine de moulage de préformes destinées à la fabrication de récipients, ledit dispositif comportant au moins une partie fixe et une partie mobile qui est entrainée en rotation par rapport à ladite partie fixe autour d'un axe du dispositif et comportant des moyens d'étanchéité agencés entre au moins la partie fixe comportant au moins un conduit d'alimentation relié à une source d'alimentation en matière thermoplastique et la partie mobile comportant au moins un canal de distribution de ladite matière thermoplastique vers des unités de ladite machine de moulage de préformes.

On connaît de l'état de la technique des exemples de tel dispositif de distribution de matière thermoplastique pour une machine de moulage de préformes destinées à la fabrication de récipients, notamment de bouteilles en PET.

Les moyens d'étanchéité du dispositif de distribution, encore appelé joint tournant, doivent assurer l'étanchéité entre les parties fixe et mobile du dispositif à travers lesquelles circule de la matière thermoplastique à l'état fondu.

Le dispositif de distribution est interposé entre une source d'alimentation en matière thermoplastique située en amont et une machine de moulage de préformes située en aval.

Le dispositif de distribution comporte au moins une entrée qui, disposée dans la partie fixe, est destinée à être reliée à une source d'alimentation en matière thermoplastique et au moins une sortie destinée à être reliée à machine de moulage de préformes pour en alimenter les différentes unités de moulage.

Dans une machine de moulage de préformes de type rotative, le dispositif de distribution est destiné à transférer la matière thermoplastique fondue reçue de la source d'alimentation à des unités de moulage par injection agencées circonférentiellement en périphérie d'un carrousel de la machine moulage de préformes.

Le document EP-2.585.273 (SIPA) décrit et représente un exemple d'une machine de moulage de préformes de type rotative intégrée à une installation de fabrication de récipients.

La machine de moulage est équipée d'une pluralité d'unités de moulage ou de moules dans lesquels la matière thermoplastique est injectée. Généralement, chaque moule comprend un corps de moule à l'empreinte d'une face externe du corps de la préforme, et un noyau oblong à l'empreinte d'une face interne du corps de la préforme.

Pour former la préforme, la matière thermoplastique pâteuse est injectée entre le corps de moule et le noyau, lequel est ensuite retiré pour permettre l'éjection de la préforme.

La préforme obtenue comporte un corps de forme cylindrique dans le prolongement duquel un col (présentant la forme définitive de celui du récipient) délimite une ouverture, ledit corps étant fermé, à l'opposé du col, par un fond globalement de forme hémisphérique.

Pour alimenter une telle machine de moulage, la source d'alimentation, encore appelée de plastification, est généralement constituée par une extrudeuse monovis.

De manière connue, une telle extrudeuse comporte principalement une vis qui est alimentée en amont par une trémie comportant un granulat de matière thermoplastique et qui, en aval, est reliée par une filière à l'entrée d'un dispositif de distribution associé à la machine de moulage pour l'alimenter de manière continue en matière thermoplastique fondue.

L'alimentation du dispositif de distribution en matière thermoplastique se fait sous pression, par exemple à une pression de l'ordre de 50 Bars, et à des températures élevées, par exemple de l'ordre de 300°C, et cela afin de maintenir la matière thermoplastique à l'état fondu.

Dans un dispositif de distribution, les moyens d'étanchéité comportent principalement un joint tournant raccordant au moins un conduit d'alimentation disposé dans la partie fixe à plusieurs canaux de distribution disposés dans la partie mobile, ledit joint tournant devant permettre une circulation de la matière thermoplastique du premier vers les seconds avec une étanchéité fiable.

Les moyens d'étanchéité sont par exemple agencés au centre du dispositif de distribution. La conception du joint tournant doit être fiable tant en utilisation du dispositif que pour éviter notamment des opérations de maintenance dans une zone centrale du dispositif, généralement difficile d'accès.

Le document EP-1.551.610 décrit un dispositif de formation de quantités prédéterminées de matière thermoplastique (ou synthétique) comportant un joint tournant avec contact.

Le joint tournant y est réalisé en métal, les températures élevées ne permettant que difficilement d'utiliser un joint d'étanchéité composite.

Cependant, un tel joint avec contact présente parfois une étanchéité perfectible, en fonctionnement dynamique, notamment en raison de l'usure survenant entre les éléments d'étanchéité en contact lorsque la partie mobile est entraînée relativement à la partie fixe.

Le document WO-2011/161649 décrit une installation de fabrication de récipients en matière thermoplastique, notamment des bouteilles, comportant un dispositif de distribution de matière thermoplastique qui est situé en aval d'une extrudeuse comportant une vis d'injection.

Le dispositif de distribution est destiné à distribuer la matière thermoplastique fondue aux différentes unités de moulage de la machine de moulage de préformes de type rotative.

Ce document décrit des moyens d'étanchéité comportant un système dit de « labyrinthe » formant un joint sans contact dans lequel une partie de la matière thermoplastique flue axialement dans le labyrinthe pour assurer elle-même l'étanchéité, ladite partie de la matière thermoplastique y étant chauffée en permanence pour pouvoir être remontée automatiquement lorsque l'une mobile des parties dudit système « labyrinthe » est entraînée en rotation par rapport à l'autre.

De tels moyens d'étanchéité ne donnent cependant pas satisfaction car en raison de leur agencement et de la conception du dispositif de distribution, un bouchon de matière thermoplastique peut se solidifier dans certaines parties du circuit de distribution en cas de refroidissement.

Dans une machine de moulage de préformes et plus particulièrement dans le dispositif de distribution l'alimentant, la longueur du parcours suivi par la matière thermoplastique fondue est un facteur influant sur la qualité de la matière thermoplastique délivré en sortie car plus grande est cette longueur, plus importants seront le temps de parcours et la pression exercée sur la matière thermoplastique.

Or, on assiste à des phénomènes de dégradation des matières thermoplastiques comme le PET, tout particulièrement à la génération d'acétaldéhyde ou « AA », lorsque ce temps de parcours est trop important et également à un cisaillement de la matière thermoplastique lorsque la pression exercée sur celle-ci est trop importante.

Le but de la présente invention est notamment de proposer des moyens d'étanchéité perfectionnés pour un dispositif de distribution de matière thermoplastique à une machine de moulage de préformes destinées à la fabrication de récipients, tels que des bouteilles, permettant de résoudre tout ou partie des inconvénients précités.

Dans ce but, l'invention propose un dispositif de distribution de matière thermoplastique du type décrit précédemment, caractérisé en ce que lesdits moyens d'étanchéité comportent un première surface d'étanchéité solidaire de la partie fixe et une deuxième surface d'étanchéité liée en déplacement à la partie mobile qui s'étendent radialement, lesdites première et deuxième surfaces d'étanchéité étant séparées axialement l'une de l'autre par un interstice dans lequel flue une partie de la matière thermoplastique en circulation, au moins l'une desdites première et deuxième surfaces d'étanchéité comportant des moyens de rabattage pour ramener radialement la matière thermoplastique lorsque la partie mobile est entraînée par rapport à la partie fixe et en ce que lesdits moyens d'étanchéité comportent au moins des moyens de refroidissement associés pour obtenir radialement un gradient de température dans au moins l'une desdites première et deuxième surfaces d'étanchéité afin d'augmenter la viscosité de ladite matière thermoplastique située entre lesdites surfaces d'étanchéité.

Avantageusement, ladite matière thermoplastique située entre lesdites surfaces d'étanchéité dont la viscosité est augmentée par refroidissement va former elle-même un joint dans l'interstice.

Les moyens d'étanchéité réalisés selon l'invention forment avantageusement un joint de type sans contact en conséquence de quoi ils ne présentent pas, par comparaison avec un joint avec contact, de risques de détérioration des surfaces d'étanchéité du fait d'usures imputables aux frottements et pouvant provoquer des défauts d'étanchéité.

Les moyens d'étanchéité sont moins sensibles en fonctionnement au défaut de guidage en raison de la disposition radiale desdites surfaces d'étanchéité, le plan de joint s'étendant orthogonalement à l'axe de rotation du dispositif de distribution.

La pression exercée par la matière thermoplastique présente dans l'interstice tend à écarter axialement l'une de l'autre lesdites première et deuxième surfaces d'étanchéité, ce qui les protègent respectivement en évitant tout contact direct.

Les moyens de purge sont susceptibles d'être utilisés comme moyens de dépressurisation pour réduire la pression exercée par la matière thermoplastique à l'intérieur du dispositif de distribution, notamment à l'intérieur dudit au moins conduit d'alimentation, et cela tout particulièrement en cas d'arrêt temporaire du dispositif de distribution.

Avantageusement, le dispositif de distribution est susceptible d'être entraîné en rotation « à froid », y compris manuellement, notamment après un arrêt prolongé, en particulier grâce aux moyens de dépressurisation, aux moyens de purge, à l'organe formant plongeur.

La compacité des moyens d'étanchéité permet de réduire les volumes morts de matière thermoplastique et les problèmes liés à la dilatation de la matière thermoplastique fondue.

De préférence, l'ensemble du parcours suivi par la matière thermoplastique à l'intérieur du dispositif de distribution est chauffé par l'intermédiaire de moyens de chauffage disposés tant dans la partie fixe que dans la partie mobile afin notamment de permettre un démarrage du dispositif quel que soit l'état initial, en particulier un démarrage après un arrêt temporaire comme, et surtout, après un arrêt prolongé.

Avantageusement, les moyens de refroidissement associés permettent d'assurer en permanence l'étanchéité, même en cas d'arrêt d'entraînement en rotation de la partie mobile du dispositif de distribution ayant pour conséquence que les moyens de rabattage cessent alors de ramener automatiquement la matière thermoplastique radialement vers l'intérieur.

Selon d'autres caractéristiques de l'invention :
- lesdits moyens de refroidissement comportent au moins un circuit de refroidissement associé auxdits moyens d'étanchéité pour maintenir la matière thermoplastique située radialement en périphérie du joint à une température de consigne déterminée qui est inférieure à la température de fusion de la matière thermoplastique ;
- les moyens de rabattage sont constitués par au moins une spirale ménagée dans l'une desdites surfaces d'étanchéité ;
- le dispositif comporte des moyens de dépressurisation pour contrôler la pression exercée par la matière thermoplastique à l'intérieur du dispositif de distribution ;
- le dispositif comporte des moyens de purge pour purger au moins une partie de la matière thermoplastique présente à l'intérieur dudit dispositif ;
- le dispositif comporte des moyens de chauffage disposés dans des zones déterminées à l'intérieur du dispositif pour chauffer la matière thermoplastique afin de maintenir ladite matière thermoplastique à une température supérieure ou égale à la température de fusion ;
- le dispositif comporte au moins des moyens de chauffage qui, associés aux moyens d'étanchéité, sont disposés à proximité de l'une au moins desdites surfaces d'étanchéité pour chauffer une partie de la matière thermoplastique présente dans l'interstice ;
- le dispositif comporte des moyens d'assistance à la purge aptes à introduire un fluide sous pression, dans le sens opposé à celui de la circulation de la matière thermoplastique à l'intérieur du dispositif, pour faciliter l'évacuation de la matière thermoplastique lors d'une opération de purge ;
- le dispositif comporte un organe formant plongeur qui est introduit sélectivement pour réduire localement la section de la partie de la matière thermoplastique ;
- ledit dispositif de conception générale en « O » comporte centralement un passage axial ;
- le dispositif comporte au moins un circuit de distribution alimentant simultanément à partir d'une entrée au moins deux canaux radiaux de distribution qui sont circonférentiellement consécutifs ;
- le dispositif comporte un double circuit de distribution de matière thermoplastique, respectivement au moins un premier circuit de distribution d'une matière thermoplastique et un deuxième circuit de distribution d'une autre matière thermoplastique.

D'autres caractéristiques et avantages de l'invention apparaîtront à la lecture de la description qui va suivre pour la compréhension de laquelle on se reportera aux dessins annexés dans lesquels :
- la figure 1 est une vue en perspective qui représente un exemple d'un dispositif de distribution de matière thermoplastique pour une machine de moulage de préformes et qui illustre un premier mode de réalisation de l'invention ;
- la figure 2 est une vue en coupe qui représente les moyens d'étanchéité du dispositif selon la figure 1 et qui illustre ledit dispositif fonctionnant en mode de distribution pour lequel notamment les moyens de purge sont en position d'obturation et le plongeur en position haute de repos ;
- la figure 3 est une vue en coupe qui, analogue à la figure 2, représente le dispositif selon la figure 1 et qui illustre plus particulièrement les moyens de refroidissement associés aux moyens d'étanchéité ;
- la figure 4 est une vue en coupe analogue à la figure 2 qui représente les moyens d'étanchéité du dispositif et qui illustre ledit dispositif fonctionnant en mode d'intervention dans lequel notamment les moyens de purge sont en position de purge et le plongeur en position basse de travail ;
- la figure 5 est une vue en perspective avec éclaté qui représente vu par dessous la deuxième surface d'étanchéité de la partie mobile du dispositif selon les figures 1 à 4 et qui illustre plus particulièrement des moyens de rabattage de la matière thermoplastique formés par une spirale ;
- la figure 6 est une vue en perspective en éclaté analogue à la figure 5 qui représente vu par dessus la première surface d'étanchéité de la partie fixe ;
- la figure 7 est une vue en perspective qui représente un deuxième mode de réalisation d'un dispositif de distribution comportant des moyens d'étanchéité selon l'invention et qui illustre une conception destiné en outre à réduire le parcours de la matière thermoplastique ;
- les figures 8 et 9 sont respectivement des vues en éclaté qui représentent le dispositif de distribution selon la figure 7 et qui illustrent les moyens d'étanchéité associé au double circuit de distribution ;
- la figure 10 est une vue en coupe qui représente le dispositif de distribution selon la figure 7 et qui illustre notamment les moyens d'étanchéité associé au double circuit de distribution.

Dans la suite de la présente description, on utilisera par convention une direction générale « axiale » donnée en référence à l'axe de rotation du dispositif de distribution et une direction « radiale » qui est orthogonale à ladite direction axiale.

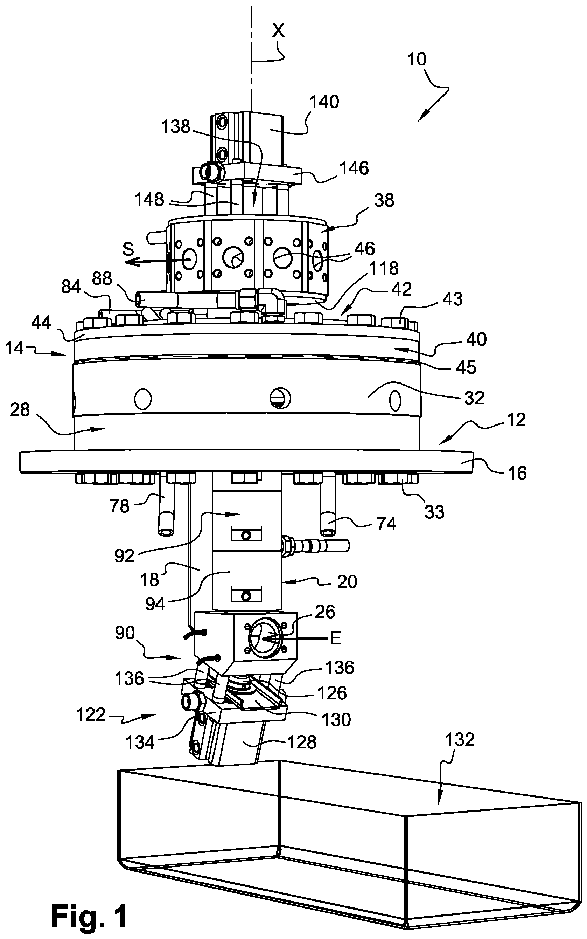

On a représenté sur les figures 1 à 5, un dispositif 10 de distribution de matière thermoplastique selon un premier mode de réalisation de l'invention.

Le dispositif 10 de distribution de matière thermoplastique est destiné à être associé à une machine de moulage de préformes (non représentée) de type rotative.

Les préformes en matière thermoplastique obtenues sont destinées à la fabrication de récipients, tels que des flacons, des pots ou des bouteilles.

Les récipients sont fabriqués à partir de telles préformes chaudes qui sont généralement transformées par soufflage au moyen d'au moins un fluide sous pression, avec ou sans étirage, dans un moule correspondant au récipient.

Les récipients, comme les bouteilles, sont par exemple réalisés en Polyéthylene Terephtalate (PET) et sont notamment mais non exclusivement utilisés dans le domaine de l'agro-alimentaire.

Tel que rappelé en préambule, le dispositif 10 de distribution de matière thermoplastique est généralement alimenté en matière thermoplastique par des moyens d'extrusion (non représentés), tels qu'une extrudeuse monovis.

Le principe de base de l'extrusion monovis est l'utilisation d'une vis sans fin qui tourne à l'intérieur d'un fourreau cylindrique, l'extrudeuse assurant la fusion du polymère solide, puis la mise en pression et le mélange du polymère fondu afin d'alimenter une filière agencée en sortie.

Une extrudeuse monovis comporte généralement une zone d'alimentation à laquelle succède une zone de compression dans laquelle s'opère la fusion-plastification, puis une zone de pompage et enfin une filière. La zone d'alimentation de l'extrudeuse monovis est reliée à une trémie remplie de matière thermoplastique à l'état solide, par exemple sous forme de granulat.

La filière d'une telle extrudeuse monovis est reliée à au moins une entrée (E) du dispositif 10 de distribution de matière thermoplastique qui comporte une pluralité de sorties (S) pour distribuer ladite matière thermoplastique fondue aux différentes unités de moulage (non représentées) ou moules d'une machine de moulage de préformes à laquelle ledit dispositif 10 de distribution est associé.

Le dispositif 10 de distribution de matière thermoplastique à une machine de moulage de préformes comporte principalement au moins une partie 12 fixe et une partie 14 mobile, ladite partie 12 fixe étant entrainée en rotation par rapport à ladite partie 14 fixe autour d'un axe X de rotation du dispositif.

La partie 12 fixe s'étend axialement en dessous de la partie 14 mobile. La partie 12 fixe comporte une plaque 16 de support, ici de forme annulaire, à partir de laquelle s'étend axialement vers le bas une cornière 18 anti-rotation.

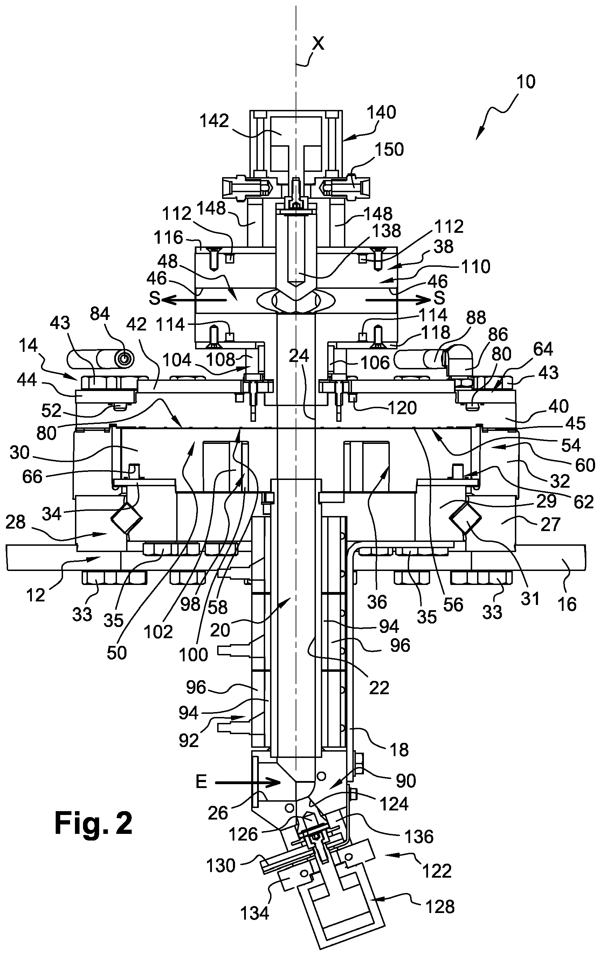

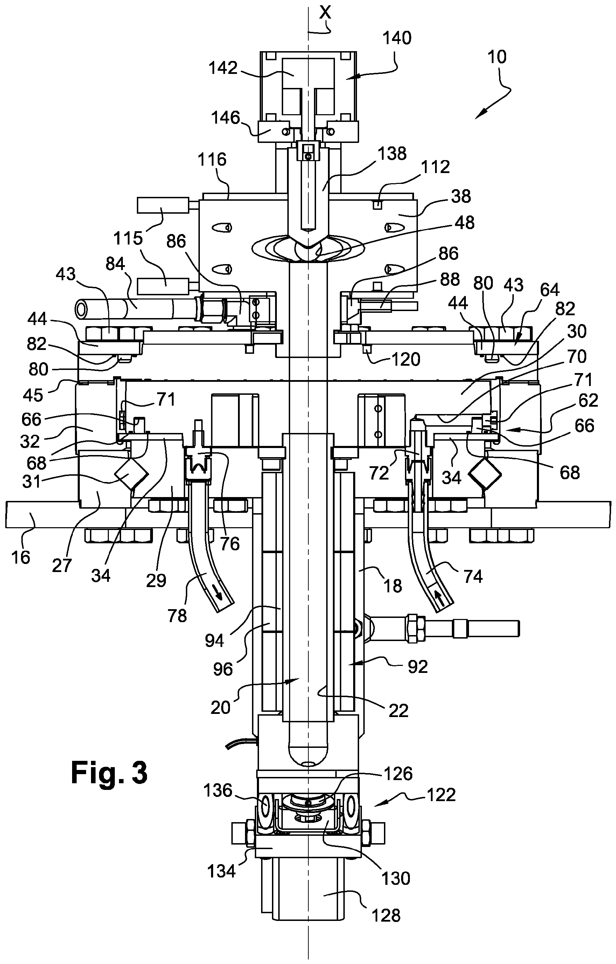

Tel qu'illustré par les figures 2 et 3, la cornière 18 anti-rotation présente une forme en « L » inversé qui comporte une partie d'orientation axiale à partir de l'extrémité supérieure de laquelle s'étend une autre partie d'orientation radiale.

La partie 12 fixe comporte au moins un conduit 20 d'alimentation qui est relié à la source d'alimentation en matière thermoplastique.

Dans ce premier mode de réalisation, le dispositif 10 de distribution comporte un conduit 20 d'alimentation principal qui s'étend axialement suivant l'axe X de rotation et qui est agencé centralement par rapport audit dispositif 10 de distribution et ledit axe X de rotation.

Le conduit 20 d'alimentation s'étend axialement de manière rectiligne à travers la partie 12 fixe et la partie 14 mobile, ledit conduit 20 d'alimentation comportant respectivement au moins un premier tronçon 22 et un deuxième tronçon 24.

Le conduit 20 d'alimentation comporte à l'extrémité inférieure dudit premier tronçon 22 une portion coudée, ici à angle droit, qui se prolonge par un tronçon d'orientation radial dont l'extrémité libre comporte un orifice 26 d'alimentation en matière thermoplastique du dispositif 10 de distribution.

L'orifice 26 d'alimentation constitue l'entrée E dudit dispositif 10 de distribution, ledit orifice 26 étant destiné à être relié à la sortie de la source d'alimentation en matière thermoplastique fondue, telle que la sortie de la filière d'une extrudeuse monovis.

Le dispositif 10 de distribution comporte au moins des moyens 28 de guidage en rotation intervenant entre la partie 12 fixe et la partie 14 mobile.

Les moyens 28 de guidage sont par exemple réalisés sous la forme de couronnes agencées radialement de manière concentriques et disposées entre la plaque 16 de support et un plateau 30 fixe.

De préférence, les moyens 28 de guidage sont réalisés en deux parties, respectivement une première couronne 27 et une deuxième couronne 29.

Le dispositif 10 de distribution comporte une première couronne 27 qui, de forme annulaire et d'orientation radiale, est agencée radialement à l'extérieur et fixée à la plaque 16 de support.

Le dispositif 10 de distribution comporte une deuxième couronne 29 qui, de forme annulaire et d'orientation radiale, est agencée radialement à l'intérieur de la première couronne 27, la première couronne 27 étant reliée à la deuxième couronne 29 par l'intermédiaire d'un élément 31 de guidage.

L'élément 31 de guidage est par exemple réalisé sous la forme d'une bague annulaire qui est interposée radialement entre la première couronne 27 et la deuxième couronne 29, ledit élément 31 de guidage présentant, en section, une forme générale de losange.

Ledit élément 31 de guidage est reçu dans des rainures complémentaires que comportent respectivement chacune des dites première et deuxième couronnes 27 et 29, respectivement sur leurs faces interne et externe.

Le dispositif 10 de distribution comporte une entretoise 32 présentant une forme annulaire et qui, agencée radialement à l'extérieur du dispositif 10, est superposée à la première couronne 27. L'entretoise 32 est interposée axialement entre la première couronne 27 et la partie 14 mobile.

Des moyens de fixation, tels que des vis notamment, sont utilisés pour fixer entre elles certaines des pièces desdites parties fixe et mobile 12 et 14 du dispositif 10 de distribution.

De préférence, des vis 33 sont utilisées pour fixer ensemble la plaque 16 de support, la première couronne 27 et l'entretoise 32. Les vis 33 sont réparties circonférentiellement de manière régulière, les têtes desdites vis 33 sont en appui contre une face radiale inférieure de la plaque 16 de support et leurs corps traversent axialement intégralement ladite première couronne 27.

Des vis 35 sont également utilisées pour fixer ensemble la partie d'orientation radiale de la cornière 18 anti-rotation, la deuxième couronne 29, une entretoise 34 et le plateau 30 fixe.

Axialement à l'opposé de l'orifice 26 formant l'entrée E, ledit premier tronçon 22 du conduit 20 d'alimentation traverse axialement en son centre ledit plateau 30 fixe.

Le plateau 30 fixe comporte un évidemment 36 réalisé en creux dans ledit plateau 30 et ouvert axialement vers le bas.

L'évidement 36 annulaire entoure circonférentiellement une portion radialement interne dudit plateau 30, laquelle portion radialement interne est traversée axialement en son centre par le premier tronçon 22 du conduit 20 d'alimentation et est entourée par une portion radialement externe dudit plateau 30.

La partie 14 mobile comporte principalement un distributeur 38 et un plateau 40 tournant.

Le plateau 40 tournant est superposé axialement au plateau 30 fixe et s'étend radialement au-delà, ledit plateau 40 tournant étant lié en rotation à l'entretoise 32 par des moyens de fixation formés par des vis 43.

Le plateau 40 tournant comporte une face supérieure qui, centralement, est recouverte par une rondelle 42.

Avantageusement, la rondelle 42 présente des propriétés d'isolation thermique de manière à limiter notamment les échanges thermiques entre l'air et le plateau 40 tournant.

Le plateau 40 tournant comporte radialement en périphérie une entretoise 44, ladite entretoise 44 annulaire entourant la rondelle 42 isolante et étant traversée axialement par les vis 43.

Les vis 43 fixent ainsi ensemble l'entretoise 44, le plateau 40 tournant et la rondelle 42 qui est solidaire en rotation de la première couronne 27 externe par l'intermédiaire des vis 33.

De préférence, une cale 45 est interposée axialement entre le plateau 40 tournant et la rondelle 42, ladite cale 45 étant par exemple une cale de type pelable.

Comme le plateau 30 fixe, le plateau 40 tournant est traversé centralement par le conduit 20 d'alimentation en matière thermoplastique, plus précisément par le tronçon 24 supérieur dudit conduit 20 qui se prolonge axialement au-delà dans le distributeur 38 agencé au-dessus du plateau 40 tournant.

Le tronçon 24 supérieur du conduit 20 d'alimentation communique à son extrémité supérieure avec une pluralité de canaux 48 de distribution qui s'étendent radialement et débouchent par une ouverture 46 dans la face axiale externe cylindrique du distributeur 38.

Les canaux 48 de distribution sont rectilignes, orthogonaux à l'axe X de rotation, et sont répartis circonférentiellement de manière régulière dans le distributeur 38.

Chaque canal 48 de distribution débouche à son extrémité radiale interne dans le conduit 20 d'alimentation en matière thermoplastique et distribue par son ouverture 46, disposée à l'opposé à son extrémité radiale externe, la matière thermoplastique à l'une des unités de moulage d'une machine de moulage de préformes.

Les ouvertures 46 desdits canaux 48 de distribution constituent la sortie S du dispositif 10 de distribution.

Le dispositif 10 de distribution comporte des moyens 50 d'étanchéité agencés entre au moins la partie 12 fixe comportant au moins ledit conduit 20 d'alimentation en matière thermoplastique et la partie 14 mobile comportant la pluralité de canaux 48 de distribution de ladite matière thermoplastique.

Les moyens 50 d'étanchéité comportent une première surface 52 d'étanchéité solidaire de la partie 12 fixe et une deuxième surface 54 d'étanchéité liée en déplacement à la partie 14 mobile qui s'étendent radialement.

Lesdites première et deuxième surfaces 52 et 54 d'étanchéité sont séparées axialement l'une de l'autre par un interstice 56 dans lequel flue une partie de la matière thermoplastique circulant, en fonctionnement, dudit au moins un conduit 20 d'alimentation vers lesdits canaux 48 de distribution.

La première surface 52 d'étanchéité est formée par la face radiale supérieure du plateau 30 fixe de ladite partie 12 fixe tandis que la deuxième surface 54 d'étanchéité est formée par la face radiale inférieure du plateau 40 tournant de la partie 14 mobile.

Avantageusement, au moins l'une desdites première et deuxième surfaces 52 et 54 d'étanchéité comporte des moyens 58 de rabattage pour ramener automatiquement la matière thermoplastique radialement de l'extérieur vers l'intérieur lorsque la partie mobile est entraînée par rapport à la partie fixe, c'est-à-dire lorsque le plateau 40 tournant est entraîné en rotation relativement au plateau 30 fixe.

Les moyens 58 de rabattage sont par exemple constitués par au moins une spirale ménagée dans l'une desdites surfaces d'étanchéité 52, 54.

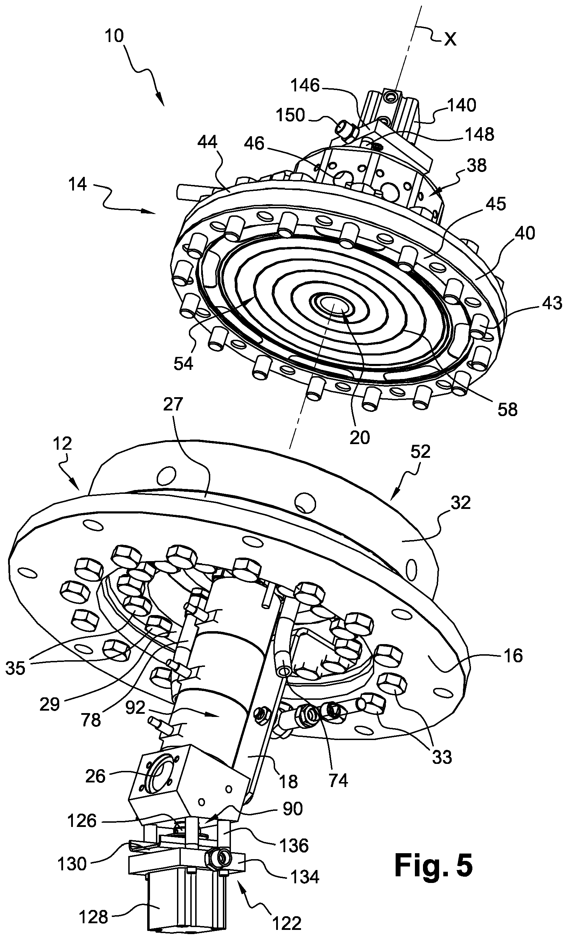

Dans ce premier mode de réalisation et tel qu'illustré tout particulièrement par la figure 5, les moyens 58 de rabattage sont réalisés dans la deuxième surface 54 d'étanchéité portée par le plateau 40 tournant de la partie 14 mobile.

En variante, les moyens 58 de rabattage sont réalisés dans la première surface 52 d'étanchéité portée par la partie 12 fixe, ici par le plateau 30 fixe.

La spirale formant les moyens 58 de rabattage est usinée en creux dans la face radiale inférieure du plateau 40 tournant.

Le sens d'enroulement de la spirale formant les moyens 58 de rabattage à partir de son centre proche de l'axe X est déterminé par rapport au sens de rotation de la partie 14 mobile pour ramener automatiquement la matière thermoplastique, radialement de l'extérieur vers l'intérieur, vers le conduit 20 d'alimentation.

Les moyens 58 de rabattage ramènent automatiquement une partie de la matière thermoplastique ayant fluée dans l'interstice 56 des moyens 50 d'étanchéité, au niveau d'une zone de jonction entre les parties fixe et mobile 12 et 14 traversées axialement par le conduit 20 d'alimentation.

Avantageusement, les moyens 50 d'étanchéité comportent au moins des moyens 60 de refroidissement associés.

Lesdits moyens 60 de refroidissement sont destinés à augmenter la viscosité de ladite matière thermoplastique située, radialement à l'extérieur, entre lesdites surfaces d'étanchéité 52 et 54 afin de former un joint avec ladite matière thermoplastique présente dans l'interstice 56.

Les moyens 60 de refroidissement comportent au moins un circuit de refroidissement associé auxdits moyens 50 d'étanchéité pour maintenir la matière thermoplastique située radialement en périphérie du joint à une température (Tc) de consigne déterminée qui est inférieure à la température (Tf) de fusion de la matière thermoplastique.

De préférence, les moyens 60 de refroidissement utilisent au moins un fluide de refroidissement, constitué en tout ou partie par de l'eau, ledit fluide étant mis en circulation de manière régulée dans ledit au moins un circuit de refroidissement.

A titre d'exemple non limitatif, lorsque la matière thermoplastique est formée par du PET, la température (Tc) de consigne est égale à 250°C étant rappelé que la température (Tf) de fusion du PET est égale à 255°C.

Avantageusement, ledit au moins un circuit de refroidissement est contrôlé sélectivement par une unité de commande associée (non représentée).

De préférence, une telle unité de commande comporte en outre des moyens de régulation de température de manière à réguler le refroidissement pour contrôler la température de la matière thermoplastique.

Les moyens de régulation (non représentés) comportent par exemple au moins des moyens de mesure de température, lesdits moyens de mesure de température pouvant notamment mesurer la température de l'une au moins desdites surfaces d'étanchéité 52 et 54 en contact avec la matière thermoplastique et/ou du fluide de refroidissement circulant dans ledit au moins un circuit de refroidissement.

Dans le premier mode de réalisation, les moyens 60 de refroidissement comportent des premiers moyens de refroidissement associés à la partie 12 fixe et des deuxièmes moyens de refroidissement associés à la partie 14 mobile.

De préférence, les moyens 60 de refroidissement comportent respectivement un premier circuit 62 de refroidissement associé au plateau 30 fixe de la partie 12 fixe et un deuxième circuit 64 de refroidissement associé au plateau 40 tournant de la partie 14 mobile.

Avantageusement, les premier et deuxième circuits 62 et 64 de refroidissement sont agencés pour refroidir la partie radiale externe de chacun desdits plateaux 30 fixe et 40 tournant qui portent respectivement la première surface 52 d'étanchéité et la deuxième surface 54 d'étanchéité.

Grâce au refroidissement réalisé localement en périphérie radiale de chacun des plateaux 30 et 40, et donc des surfaces 52 et 54 d'étanchéité, la viscosité de la matière thermoplastique présente dans l'interstice 56 est modifiée pour rendre cette matière plus pâteuse et obtenir une étanchéité qui est assurée par la matière thermoplastique elle-même.

Les moyens 60 de refroidissement sont commandés pour obtenir un gradient de température selon la direction radiale au niveau de chacune desdites surfaces 52, 54 d'étanchéité, la matière thermoplastique présentant une température supérieure à proximité du conduit 20 d'alimentation qu'à la périphérie radiale externe des plateaux 30 fixe et 40 tournant.

La viscosité de la matière thermoplastique fluant dans l'interstice 56 varie par conséquent radialement selon ce gradient de température, la viscosité étant plus grande radialement à l'extérieur qu'à l'intérieur.

Avantageusement, un tel gradient de viscosité permet d'assurer l'étanchéité radialement à l'extérieur entre le plateau 30 fixe d'une part et le plateau 40 tournant d'autre part.

Le gradient de viscosité facilite l'action des moyens 58 de rabattage qui ramènent radialement de l'extérieur vers l'intérieur la partie de la matière thermoplastique présente dans l'interstice 56.

Le premier circuit 62 de refroidissement associé à la partie 12 fixe est réalisé dans la partie radiale externe du plateau 30 fixe.

Le plateau 30 fixe comporte une gorge 66 qui s'étend sur tout ou partie de la circonférence dudit plateau 30 fixe, la gorge 66 est par exemple réalisée par usinage dans la face radiale inférieure dudit plateau 30 fixe et est ouverte axialement vers le bas.

La gorge 66 est fermée de manière étanche par l'intermédiaire de moyens 68 d'étanchéité, tels que deux joints.

De préférence, les deux joints 68 d'étanchéité sont agencés radialement de part et d'autre, respectivement à l'intérieur et à l'extérieur, de la gorge 66. Les joints 68 d'étanchéité coopèrent avec la face radiale supérieure de l'entretoise 34 qui vient fermer axialement par le dessous la gorge 66, ladite entretoise 34 étant fixée au plateau 30 fixe par l'intermédiaire des vis 35.

La gorge 66 est alimentée en fluide de refroidissement par l'intermédiaire d'au moins un perçage 70 qui s'étend radialement à travers le plateau 30 fixe, ledit perçage 70 plus particulièrement visible sur la figure 3 communique à une extrémité avec la gorge 66.

Le perçage 70 réalisé dans le plateau 30 fixe débouche radialement, au-delà de la gorge 66, dans la face axiale externe dudit plateau 30 et est obturé de manière étanche par exemple ici par un bouchon 71.

A l'extrémité opposée, le perçage 70 radial est alimentée en fluide de refroidissement par l'intermédiaire d'un embout 72 sur lequel se raccorde de manière amovible une conduite 74 d'alimentation en fluide de refroidissement.

De préférence, le premier circuit 62 de refroidissement comporte une entrée et une sortie respectivement reliée à la gorge 66 et entre lesquelles le fluide de refroidissement va circuler suivant une boucle.

Le fluide de refroidissement est par exemple amené par la conduite 74 d'alimentation et introduit dans la gorge 66 par l'intermédiaire de l'embout 72 et du perçage 70, puis lorsque ledit fluide a parcouru la boucle formée par la gorge 66 annulaire, il est ensuite évacué par des moyens analogues à savoir un autre perçage radial (non représenté) qui met en communication ladite gorge 66 avec un embout 76 et une conduite 78 d'évacuation.

Chacun des embouts 72 et 76 débouche axialement à son extrémité supérieure dans celui des perçages auquel il est associé et les conduites 74 et 78 sont par conséquent raccordées axialement par le dessous du dispositif 10 de distribution à l'autre extrémité inférieure des embouts 72 et 76, par exemple par un système dit « de raccord rapide ».

Le deuxième circuit 64 de refroidissement est associé au plateau 40 tournant est de conception analogue au premier circuit 62 de refroidissement.

Le deuxième circuit 64 de refroidissement comporte une gorge 80, de préférence annulaire et usinée dans le plateau 40 tournant, ladite gorge 80 étant ouverte axialement vers le haut dans la face radiale supérieure dudit plateau 40 tournant.

La gorge 80 est fermée de manière étanche par l'entretoise 44 avec interposition de moyens 82 d'étanchéité, tels que des joints, l'entretoise 44 étant serrée axialement et solidaire dudit plateau 40 tournant grâce aux vis 43.

La gorge 80 est alimentée en fluide de refroidissement par des perçages (non représentés) réalisés dans le plateau 40 tournant afin de mettre en communication ladite gorge 80 avec une conduite 84 d'alimentation par laquelle ledit fluide de refroidissement est amené et une conduite 88 d'évacuation par laquelle ledit fluide de refroidissement est évacué après avoir circulé dans la gorge 80 et refroidi localement la périphérie radiale externe dudit plateau 40 tournant.

De préférence, la conduite 84 d'alimentation et la conduite 88 d'évacuation sont respectivement raccordées par l'intermédiaire de moyens 86 de raccordement qui sont du type raccord tournant afin de permettre la rotation du plateau 40 tournant et plus généralement de la partie 14 mobile relativement auxdites conduites 84 et 88 du deuxième circuit 64 de refroidissement.

Avantageusement, le dispositif 10 de distribution comporte des moyens 90 de dépressurisation pour contrôler la pression exercée par la matière thermoplastique à l'intérieur du dispositif 10 de distribution.

De tels moyens 90 de dépressurisation permettent notamment d'éviter une montée trop importante de la pression à l'intérieur du dispositif 10 de distribution lorsque celui-ci est arrêté temporairement et que la partie 14 mobile comportant le plateau 40 tournant n'est plus entraînée en rotation relativement à la partie 30 fixe, au plateau 30 et au conduit 20 d'alimentation.

Les moyens 90 de dépressurisation peuvent par exemple être réalisés sous la forme d'une vanne ou tout autre moyen équivalent communiquant avec l'intérieur du dispositif 10 de distribution.

Le dispositif 10 de distribution comporte des moyens de chauffage disposés dans des zones déterminées à l'intérieur dudit dispositif 10 pour chauffer les parties du dispositif 10 avec lesquelles la matière thermoplastique entre en contact afin notamment de maintenir ladite matière thermoplastique à une température (T) supérieure ou égale à la température (Tf) de fusion.

Avantageusement, les différents moyens de chauffage du dispositif 10 de distribution permettent de chauffer les pièces du dispositif 10 en contact avec la matière thermoplastique lors de son parcours à l'intérieur du dispositif 10 en évitant tout refroidissement.

De tels moyens de chauffage sont ainsi utilisés en fonctionnement pour maintenir la matière thermoplastique à une température supérieure à la température (Tf) de fusion, en particulier en cas d'arrêt temporaire ou prolongé pour éviter toute solidification susceptible de survenir en cas de refroidissement.

Avantageusement, le dispositif 10 de distribution comporte des moyens d'isolation thermique associés à tout ou partie desdits moyens de chauffage afin de limiter les pertes thermiques et par conséquent la consommation d'énergie desdits moyens de chauffage intégrés au dispositif 10 de distribution.

Dans le premier mode de réalisation, le dispositif 10 de distribution comporte au moins des moyens de chauffage, dits principaux, qui sont plus particulièrement associés au parcours de la matière thermoplastique à l'intérieur du dispositif 10 de distribution.

Les moyens principaux de chauffage comportent au moins des premiers moyens 92 de chauffage - dits « inférieurs » - qui sont disposés axialement au moins autour du tronçon inférieur 22 du conduit 20 d'alimentation.

Les premiers moyens 92 de chauffage ont notamment pour fonction de maintenir, à une température (T) supérieure ou égale à la température (Tf) de fusion, la matière thermoplastique qui, introduite radialement par l'orifice 26 formant l'entrée E à l'intérieur du dispositif 10, remonte axialement vers le haut ladite conduite 20 en direction du distributeur 38.

Tel qu'illustré sur les figures 1 à 6, les premiers moyens 92 de chauffage comportent des éléments 94 chauffants, ici au moins nombre de trois, qui sont agencés axialement les uns à la suite des autres sur la hauteur du tronçon 22 inférieur du conduit 20 d'alimentation.

De préférence, lesdits éléments 94 chauffants forment un manchon cylindrique qui entoure complètement le tronçon 22 inférieur du conduit 20 d'alimentation.

Avantageusement, chaque élément 94 chauffant est associé à un moyen 96 d'isolation thermique qui, agencé radialement à l'extérieur de l'élément chauffant, l'entoure pour limiter la dissipation thermique notamment avec l'air environnant.

Avantageusement, des deuxièmes moyens 98 de chauffage sont associés à la partie centrale du plateau 30 fixe que traverse axialement le conduit 20 d'alimentation.

De préférence et comme les moyens 92 de chauffage, lesdits deuxièmes moyens 98 de chauffage comportent au moins un élément 100 chauffant associé à des moyens 102 d'isolation thermique qui l'entourent circonférentiellement depuis l'extérieur.

Lesdits deuxièmes moyens 98 de chauffage sont reçus à l'intérieur de l'évidemment 36 et sont montés radialement autour de ladite partie centrale du plateau 30 fixe.

Avantageusement, le dispositif 10 de distribution comporte des troisièmes moyens 104 de chauffage qui sont associés à la base du distributeur 38 le reliant axialement au plateau 40 tournant.

De préférence, les troisièmes moyens 104 de chauffage comportent au moins un élément 106 chauffant associé à des moyens 108 d'isolation thermique qui l'entourent radialement par l'extérieur.

Les deuxièmes moyens 98 de chauffage et les troisièmes moyens 104 de chauffage constituent des moyens de chauffage - dits « intermédiaires » - qui sont respectivement agencés en amont et en aval des moyens 50 d'étanchéité du dispositif 10.

Avantageusement, l'ensemble des premiers moyens 92 de chauffage, des deuxièmes moyens 98 de chauffage et des troisièmes moyens 104 de chauffage permettent de maintenir la température de la matière thermoplastique à une température supérieure à la température (Tf) de fusion tout au long du parcours effectué axialement à l'intérieur du dispositif 10 de distribution depuis l'entrée E.

Avantageusement, les moyens principaux de chauffage du dispositif 10 de distribution comportent encore, en plus desdits moyens 92, 98, 104 de chauffage associés au conduit 20 d'alimentation, d'autres moyens de chauffage dits « supérieurs » pour maintenir la température de la matière thermoplastique à une température supérieure à la température (Tf) de fusion jusqu'à la sortie S formée par les différents canaux 48 radiaux de distribution.

Avantageusement, les moyens principaux de chauffage du dispositif 10 de distribution comportent des quatrièmes moyens 110 de chauffage qui sont plus particulièrement associés auxdits canaux 48 radiaux de distribution que comporte le distributeur 38 de la partie 14 mobile.

Les quatrièmes moyens 110 de chauffage comportent au moins des moyens 112 de chauffage agencés dans la partie supérieure du distributeur 38 et des moyens 114 de chauffage agencés dans la partie inférieure du distributeur 38, lesdits canaux 48 radiaux de distribution étant situés axialement entre lesdits moyens 112 de chauffage et lesdits moyens 114 de chauffage.

Les quatrièmes moyens 110 de chauffage sont par exemple réalisés sous la forme d'une résistance alimentée électriquement par des connecteurs 115 (figure 3).

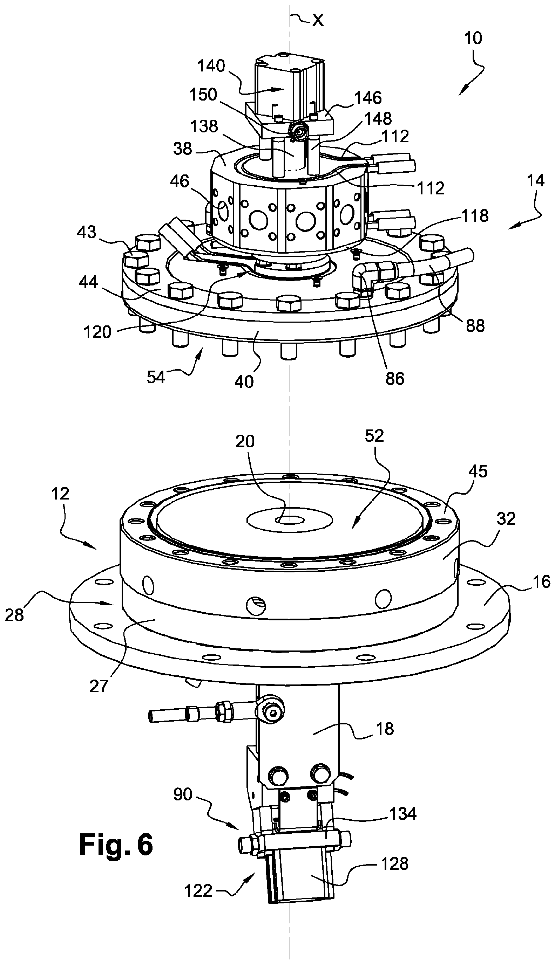

Les moyens 112 de chauffage agencés dans la partie supérieure du distributeur 38 sont plus particulièrement visibles sur la figure 6 sur laquelle les moyens d'isolation thermique qui leur sont associés ont été mis en transparence afin de les rendre visible.

En effet, le distributeur 38 comporte avantageusement une rondelle 116 supérieure d'isolation thermique qui, associée aux moyens 112 de chauffage, recouvre la face radiale supérieure du distributeur 38.

Le distributeur 38 comporte une rondelle 118 inférieure d'isolation thermique qui, associée aux moyens 114 de chauffage, recouvre la face radiale inférieure du distributeur 38.

De préférence et tel qu'illustré sur les figures, lesdites rondelle 116 et rondelle 118 d'isolation thermique sont respectivement maintenues solidaires du distributeur 38 par des moyens de fixation, tels que des vis.

Avantageusement, le dispositif 10 de distribution comporte des moyens de chauffage, dits secondaires, qui sont plus particulièrement associés aux moyens 50 d'étanchéité.

Dans ce premier mode de réalisation, des moyens 120 secondaires de chauffage sont plus particulièrement associés au moins au plateau 40 tournant comportant la deuxième surface 54 d'étanchéité.

Tel qu'illustré par la figure 6 sur laquelle la rondelle 42 isolante a été mise en transparence, les moyens 120 secondaires de chauffage sont logés dans la face radiale supérieure du plateau 40 tournant et disposés radialement à l'intérieur, c'est-à-dire radialement à l'opposé du deuxième circuit 64 de refroidissement.

Le dispositif 10 de distribution comporte au moins des moyens 120 secondaires de chauffage qui, associés aux moyens 50 d'étanchéité, sont disposés à proximité de l'une au moins desdites surfaces 52 et 54 d'étanchéité pour chauffer, à une température (T) supérieure à la température (Tf) de fusion, la partie de la matière thermoplastique présente dans l'interstice 56.

Avantageusement, les moyens 120 secondaires de chauffage sont susceptibles d'être utilisés en combinaison avec le deuxième circuit 64 de refroidissement pour obtenir radialement, de l'intérieur vers l'extérieur, le gradient de température souhaité entre lesdites surfaces 52 et 54 d'étanchéité et ce faisant la modification de la viscosité de la matière thermoplastique présente dans l'interstice 56.

Cette possible utilisation desdits moyens 120 secondaires de chauffage en relation avec les moyens 60 de refroidissement des moyens 50 d'étanchéité les distinguent fonctionnellement desdits moyens principaux de chauffage.

Tel qu'indiqué précédemment, les différents moyens de chauffage (principaux comme secondaires) équipant ledit dispositif 10 de distribution sont notamment utilisés dans un mode de fonctionnement, dit de distribution, pour maintenir la matière thermoplastique à une température supérieure à la température (Tf) de fusion tout au long du parcours effectué à l'intérieur du dispositif 10 de distribution.

De tels moyens de chauffage permettent tout particulièrement de maintenir la matière thermoplastique à une température supérieure à la température (Tf) de fusion en cas d'arrêt temporaire ou en vue d'un arrêt prolongé.

Avantageusement, au moins une partie des moyens de chauffage du dispositif 10 de distribution sont également susceptibles d'être utilisés dans une mode de fonctionnement particulier, dit d'intervention, du dispositif 10.

Le mode de fonctionnement, dit d'intervention, du dispositif 10 de distribution est notamment utilisé pour réaliser une opération de purge de la matière thermoplastique présente à l'intérieur du dispositif 10 de distribution.

Les différents moyens de chauffage du dispositif 10 de distribution sont alors avantageusement utilisés pour réduire par chauffage la viscosité de la matière thermoplastique afin de faciliter l'opération de purge de la matière thermoplastique.

Avantageusement, le dispositif 10 de distribution comporte des moyens 122 de purge pour purger au moins une partie de la matière thermoplastique présente à l'intérieur dudit dispositif 10, notamment la matière thermoplastique présente dans ledit conduit 20 d'alimentation.

De tels moyens 122 de purge sont en particulier mis en oeuvre en mode d'intervention pour réaliser une opération de purge avant de procéder à un arrêt du dispositif 10 de distribution avec cessation de l'entraînement en rotation de la partie 14 mobile.

Dans le premier mode de réalisation illustré aux figures 1 à 6, les moyens 122 de purge comportent au moins un orifice 124 de purge communiquant avec ledit conduit 20 d'alimentation.

Avantageusement, ledit au moins un orifice 124 de purge est positionné axialement à une extrémité inférieure du conduit 20 d'alimentation de manière à purger la matière thermoplastique avec l'aide de la gravité.

Les moyens 122 de purge comportent des moyens 126 d'obturation associés audit orifice 124 de purge et constitués par exemple par un cône d'obturation.

L'orifice 124 de purge et les moyens 126 d'obturation associés présentent des formes complémentaires, ici tronconiques, ledit orifice 124 de purge est agencé dans le coude reliant l'orifice 26 formant l'entrée E à l'extrémité inférieure du conduit 20 d'alimentation.

Avantageusement, les moyens 122 de purge assurent une double fonction et constituent lesdits moyens 90 de dépressurisation.

Les moyens 126 d'obturation sont susceptibles d'être commandés sélectivement en ouverture en mode de distribution pour permettre une dépressurisation de l'intérieur du dispositif 10 de distribution par ledit orifice 124 de purge et cela indépendamment de la mise en oeuvre d'une opération de purge.

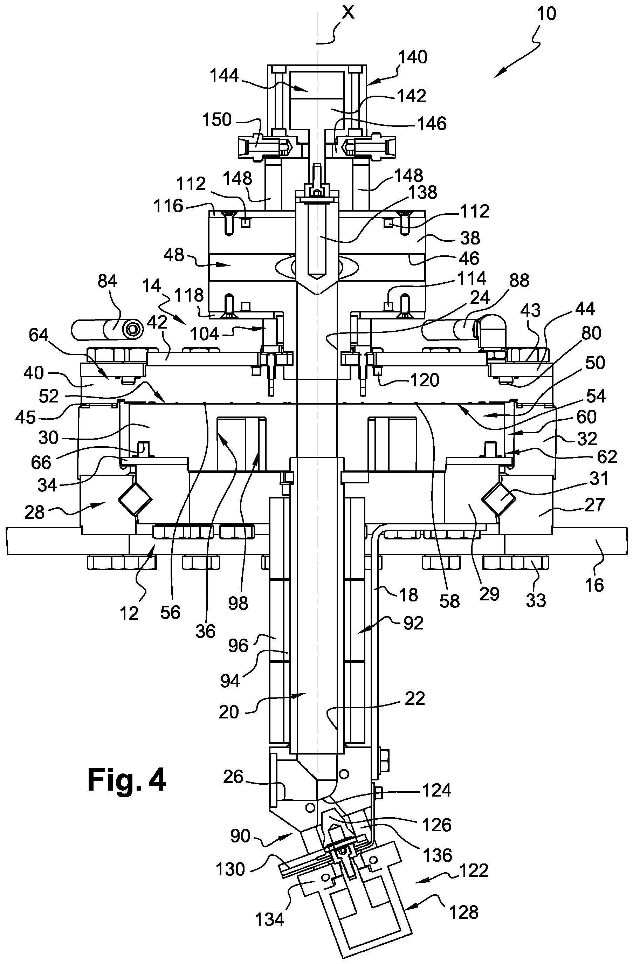

Le cône 126 d'obturation est monté mobile entre au moins une première position d'obturation illustrée aux figures 2 ou 3 et une deuxième position de purge illustrée à la figure 4.

Tel qu'illustré sur les figures, le cône 126 d'obturation est monté mobile entre au moins :
- une première position d'obturation dans laquelle ledit cône 126 obture ledit orifice 124 de purge pour empêcher la matière thermoplastique de sortir hors du conduit 20 d'alimentation, et
- une deuxième position de purge dans laquelle ledit cône 126 est déplacé pour permettre à la matière thermoplastique de sortir hors du conduit 20 d'alimentation par ledit orifice 124 de purge.

Le cône 126 d'obturation est entraîné sélectivement en déplacement entres lesdites positions d'obturation et de purge par un actionneur 128 associé, tel qu'un vérin double effet.

Avantageusement, les moyens 122 de purge comportent au moins des moyens 130 d'évacuation de la matière thermoplastique, notamment lors d'une opération de purge.

Les moyens 130 d'évacuation sont par exemple constitués par une gouttière qui est inclinée vers le bas et destinée à guider la matière thermoplastique s'échappant par l'orifice 124 de purge.

Tel qu'illustré sur la figure 1, les moyens 130 d'évacuation sont agencés par rapport audit orifice 124 de purge pour évacuer la matière thermoplastique vers des moyens 132 de récupération associés.

Les moyens 132 de récupération sont par exemple formés par un bac de collecte de matière thermoplastique, ici de forme parallélépipédique.

De préférence, l'actionneur 128 est monté sur une plaque 134 qui est reliée à l'extrémité axiale inférieure du conduit 20 d'alimentation par des colonnettes 136.

Un tel montage permet outre l'évacuation de la matière thermoplastique de protéger thermiquement l'actionneur 128 par rapport à l'entrée E du dispositif 10 dans laquelle la matière thermoplastique fondue est introduite.

Avantageusement, le dispositif 10 de distribution comporte des moyens d'assistance à la purge (non représentés).

De tels moyens d'assistance à la purge consiste par exemple à introduire un fluide sous pression dans le sens opposé à celui de la circulation de la matière thermoplastique à l'intérieur du dispositif 10 en mode de distribution et ceci afin de faciliter l'évacuation de la matière thermoplastique lors d'une opération de purge.

Le fluide sous pression des moyens d'assistance à la purge est par exemple constitué par de l'air.

De préférence, le dispositif 10 de distribution comporte au moins un organe 138 qui est destiné à être introduit au niveau de la zone de raccordement entre ledit au moins un conduit 20 d'alimentation et lesdits canaux 48 de distribution.

Avantageusement, ledit organe 138 formant un plongeur est introduit pour y réduire la section de la partie de la matière thermoplastique présente entre ledit au moins un conduit 20 d'alimentation et lesdits canaux 48 de distribution grâce à quoi ladite partie de la matière thermoplastique est susceptible d'être localement rompue, en particulier en cas de solidification survenant après un arrêt, temporaire ou prolongé, au cours duquel la partie 14 mobile ne serait plus entraînée en rotation.

L'organe 138 permet également lors de son introduction de repousser axialement vers le bas la matière thermoplastique, soit vers les moyens 122 de purge.

Dans ce premier mode de réalisation, ledit organe 138 formant le plongeur est monté mobile axialement entre au moins une position de repos correspondant à la position haute illustrée sur les figures 2 et 3, et une position de travail correspondant à la position basse illustrée sur la figures 4.

En position de repos, ledit organe 138 est escamoté pour libérer le passage de la matière thermoplastique de l'extrémité supérieure dudit au moins un conduit 20 d'alimentation vers lesdits canaux 48 radiaux de distribution du distributeur 38.

En position de travail, ledit organe 138 est introduit dans le conduit d'alimentation au niveau de la zone de raccordement pour éviter la formation d'un noyau de matière thermoplastique pouvant devenir au moins partiellement solide en fonction de la température.

De préférence, ledit organe 138 formant plongeur présente une forme de pointe à son extrémité axiale inférieure libre.

En position de travail, l'organe 138 interrompt totalement la liaison entre le conduit 20 axial d'alimentation et les canaux 48 radiaux de distribution.

L'organe 138 est entraîné sélectivement en déplacement par au moins un actionneur 140 associé, ledit organe 138 étant respectivement déplacé axialement entre lesdites positions de repos et de travail.

L'actionneur 140 est par exemple constitué par un vérin comportant un piston 142 qui est lié en déplacement à l'organe 138 par une tige, le déplacement du piston 142 étant obtenu en commandant en pression au moins une chambre 144 de commande du vérin.

De manière connue, l'actionneur 140 dudit organe 138 (comme par ailleurs l'actionneur 128 associé aux moyens 122 de purge) peut être constitué par un vérin simple effet ou double effet.

De préférence, les actionneurs 128, 140 sont des vérins double effet de type pneumatique, en variante hydraulique.

L'actionneur 140 est par exemple monté sur une plaque 146 de support qui est reliée axialement au distributeur 38 par l'intermédiaire de colonnettes 148. La plaque 146 comporte ici des raccords 150 pour l'alimentation fluidique de l'actionneur 140.

Tel qu'indiqué précédemment, un tel montage de l'actionneur 140 (comme de l'actionneur 128) permet de le protéger thermiquement.

Avantageusement, le dispositif 10 comporte des moyens de protection thermique pour protéger au moins l'actionneur 128 associé aux moyens 122 de purges et/ou l'actionneur 140 associé à l'organe 138 formant plongeur.

On décrira ci-après un deuxième mode de réalisation d'un dispositif 210 de distribution de matière thermoplastique à une machine de moulage de préformes destinées à la fabrication de récipients.

Par comparaison notamment avec le dispositif 10 de distribution selon le premier mode de réalisation représenté aux figures 1 à 6, le dispositif 210 de distribution propose une nouvelle conception grâce à laquelle le parcours effectué à l'intérieur du distributeur par une matière thermoplastique, depuis l'entrée jusqu'à la sortie, a été considérablement raccourci.

Le dispositif 210 de distribution de matière thermoplastique comporte au moins une partie 212 fixe et une partie 214 mobile qui est entrainée en rotation par rapport à ladite partie 212 fixe autour d'un axe X du dispositif.

Selon une autre caractéristique, le dispositif 210 de distribution présente une conception générale en « O », ledit dispositif 210 comportant centralement un passage P qui est ouvert axialement.

La partie 212 fixe et la partie 214 mobile présente respectivement une forme annulaire et délimitent ensemble radialement ledit passage P axial au centre du dispositif 210.

Avantageusement, une telle conception en « O » permet d'utiliser ce passage P pour passer axialement au centre tout ou partie des branchements ou raccordements nécessaires au fonctionnement dudit dispositif 210, tels que l'alimentation en fluide de moyens de refroidissement, l'alimentation en énergie de moyens de chauffage ou encore l'alimentation en fluide sous pression des moyens d'assistance à la purge.

Selon une autre caractéristique de la conception du dispositif 210 selon ce deuxième mode de réalisation, le dispositif 210 de distribution comporte un double circuit de distribution de matière thermoplastique. Le dispositif 210 de distribution est ainsi un distributeur de type bi-matière.

Avantageusement, un tel double circuit de distribution permet de mouler des préformes dans une matière thermoplastique et une autre matière thermoplastique comportant par exemple un additif donné.

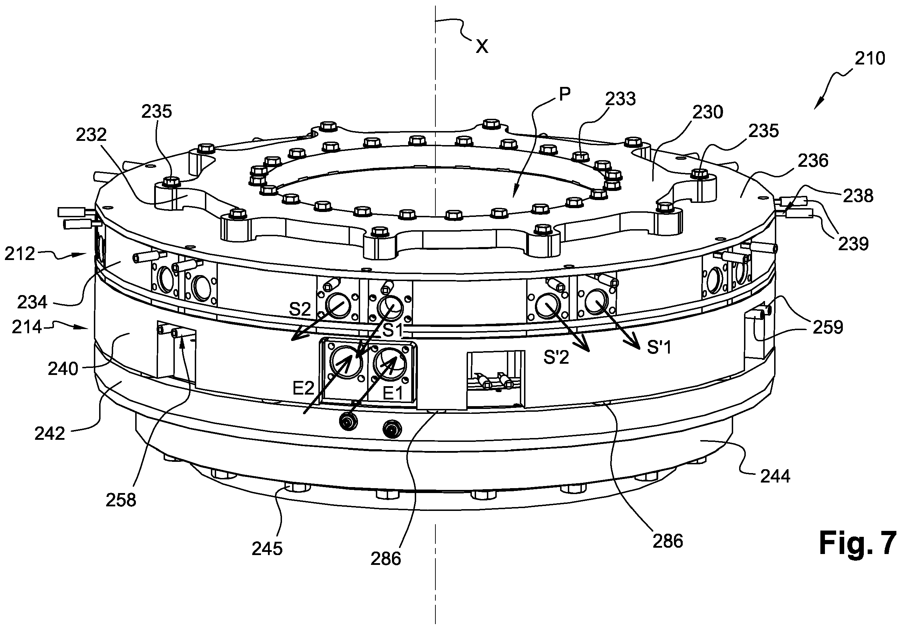

Tel qu'illustré sur la figure 7, ledit double circuit du dispositif 210 de distribution comporte au moins un premier circuit de distribution d'une matière thermoplastique et un deuxième circuit de distribution d'une autre matière thermoplastique.

Le premier circuit de distribution comporte une première entrée E1 reliée à un premier dispositif d'alimentation en matière thermoplastique (représenté schématiquement par une flèche associée à E1).

Le deuxième circuit de distribution comporte une deuxième entrée E2 reliée à un deuxième dispositif d'alimentation (représenté schématiquement par une flèche associée à E2) pour l'alimenter en une autre matière, différente de la matière thermoplastique du premier dispositif d'alimentation.

Lesdites première et deuxième entrées E1, E2 disposées dans la partie 212 fixe sont reliées respectivement par les circuits ménagés à l'intérieur du dispositif 210 à au moins une première sortie S1 et à au moins une deuxième sortie S2 qui sont disposées dans la partie 214 mobile.

En variante non représentée, le dispositif 210 de distribution présente une conception analogue mais comporte une entrée unique dans laquelle est introduite une matière thermoplastique et au moins une sortie à travers laquelle ladite matière thermoplastique est distribuée.

Suivant la conception du dispositif 210 de distribution, une matière thermoplastique est introduite radialement à l'intérieur dudit dispositif et en ressort radialement vers l'extérieur après avoir effectué axialement entre l'entrée et la sortie un parcours réduit.

La partie 214 mobile comporte au moins une jante 216 de forme générale annulaire qui comporte une partie 218 axiale globalement cylindrique et une partie 220 radiale qui s'étend radialement vers l'extérieur à partir de l'extrémité inférieure de la partie 218 axiale.

La partie 220 radiale de la jante 216 porte une couronne 222 interne qui est reliée à une couronne 224 externe par l'intermédiaire d'au moins un élément 226 de guidage interposé radialement entre lesdites couronnes 222 et 224.

Le dispositif 210 de distribution comporte des moyens de guidage qui, intervenant entre la partie 212 fixe et la partie 214 mobile, sont analogues à ceux du premier mode de réalisation et comportent une couronne 222 interne, une couronne 224 externe et un élément 226 de guidage.

Lesdites couronnes 222 et 224 peuvent être déplacées l'une par rapport à l'autre, la couronne 222 interne étant entraînée en rotation autour de l'axe X par l'intermédiaire de la jante 216 relativement à la couronne 224 externe, laquelle couronne 224 externe forme l'une des pièces de la partie 212 fixe du distributeur 210.

La couronne 222 interne est fixée par des moyens de fixation, ici des vis 225, à la partie 220 radiale de la jante 216. Les vis 225 traversent axialement lesdites partie 220 radiale et couronne 222 interne qui comportent des trous axiaux complémentaires réalisés dans chacune d'elle, les têtes des vis 225 venant en appui contre la face radiale supérieure de la couronne 222 interne. De préférence, une rondelle est interposée axialement entre la tête de chaque vis 225 et la couronne 222 interne.

Les vis 225 sont réparties circonférentiellement de manière régulière sur la couronne 222 interne et la partie 220 radiale.

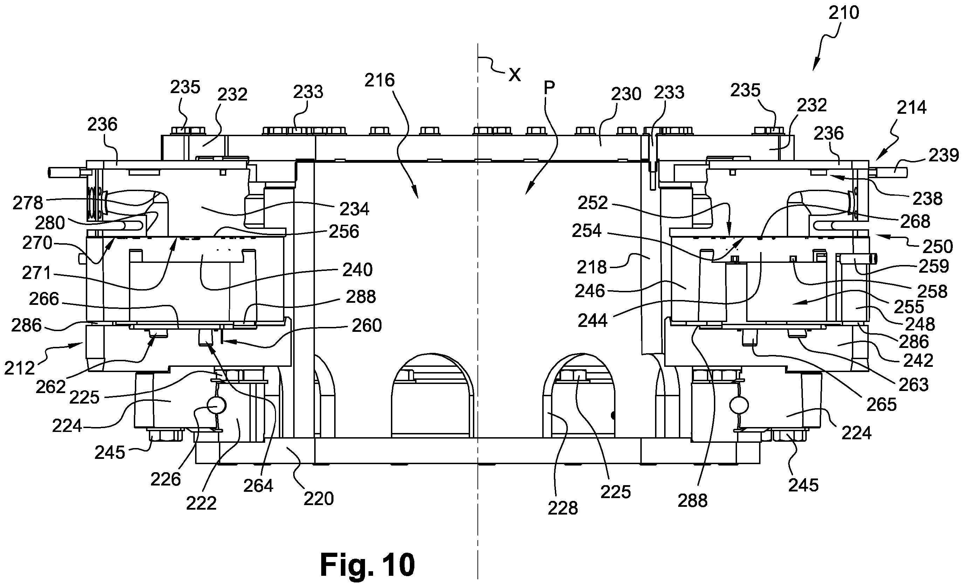

La partie 218 axiale de la jante 216 est ajourée à son extrémité inférieure et comporte des fenêtres 228 en ogive visibles notamment sur la figure 10. La partie 218 axiale de la jante 216 est fixée à son extrémité supérieure à la partie interne d'un flasque 230 de liaison qui s'étend radialement.

De préférence, les moyens de fixation du flasque 230 avec la partie 218 axiale de la jante 216 sont constitués par des vis 233, réparties circonférentiellement de manière régulière et traversant axialement la partie 218 axiale de la jante 216 et le flasque 230 contre une face radiale supérieure duquel les têtes desdites vis 233 viennent en appui.

Le flasque 230 comporte, radialement à l'opposé de la partie interne solidaire de la partie 218 axiale de la jante 216, une partie externe comportant des bras 232 qui s'étendent radialement en saillie vers l'extérieur.

Les bras 232 du flasque 230 sont fixés à un plateau 234 tournant par l'intermédiaire de vis 235. Le flasque 230 lie ainsi en rotation sans jeu la jante 216 au plateau 234 tournant.

Avantageusement, une rondelle 236 d'isolation thermique est interposée axialement entre le flasque 230 et le plateau 234 tournant, ladite rondelle 236 étant également maintenue en position par les vis 235.

Le plateau 234 tournant comporte des moyens 238 de chauffage qui sont agencés dans la face supérieure du plateau 234. Les moyens 238 de chauffage sont destinés à chauffer les parties du plateau 234 traversée par la matière thermoplastique afin notamment de maintenir la matière thermoplastique à une température (T) supérieure ou égale à la température (Tf) de fusion.

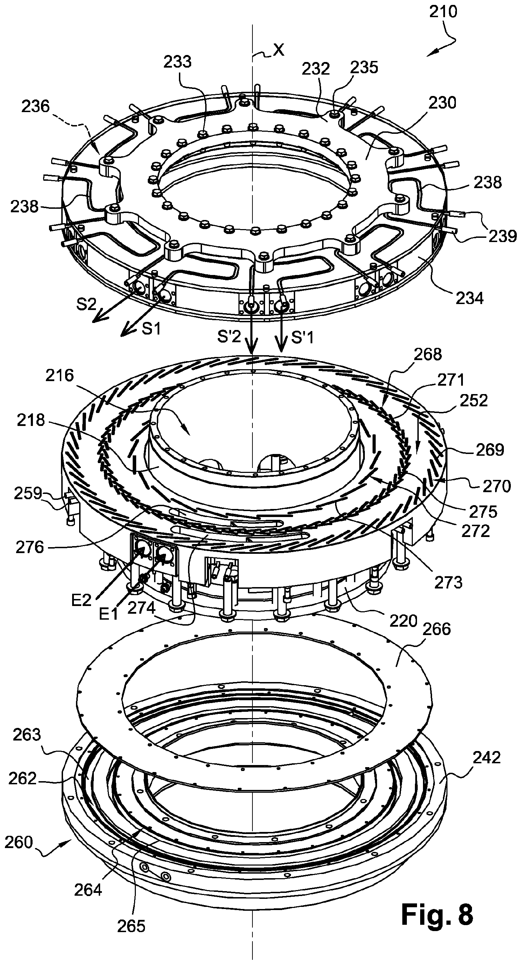

Les moyens 238 de chauffage associés au plateau 234 tournant sont plus particulièrement visibles sur la figure 8 sur laquelle la rondelle 236 d'isolation thermique a été mise en transparence.

Avantageusement, la rondelle 236 d'isolation thermique permet de limiter les pertes de chaleur vers l'air environnant et améliore le rendement des moyens 238 de chauffage en réduisant la consommation d'énergie du dispositif 210 de distribution.

De préférence, les moyens 238 de chauffage sont par exemple constitués par des résistances qui sont alimentées en électricité par l'intermédiaire de connecteurs 239.

Dans ce deuxième mode de réalisation, la partie 214 mobile comporte principalement la jante 216, la couronne 222 intérieure, le flasque 230, la rondelle 236 et le plateau 234 tournant.

La partie 212 fixe comporte au moins un plateau 240 fixe agencé axialement en dessous du plateau 234 tournant.

Le plateau 240 fixe est relié à la couronne 224 extérieure par l'intermédiaire d'une entretoise 242 comportant des moyens de refroidissement dont la fonction sera décrite ultérieurement.

L'entretoise 242 est liée en rotation à la couronne 224 extérieure par l'intermédiaire de vis 245 dont les corps sont reçus dans des trous axiaux complémentaires et dont les têtes viennent en appui contre la face radiale inférieure de la couronne 224 extérieure.

Le plateau 240 fixe présente, en coupe axiale, une forme générale de « U » inversé comportant une partie 244 radiale supérieure s'étendant radialement et à partir de laquelle s'étendent, axialement vers le bas, une partie 246 axiale inférieure située radialement à l'intérieur et une autre partie 248 axiale inférieure située radialement à l'extérieur.

Le dispositif 210 de distribution de matière thermoplastique comporte des moyens 250 d'étanchéité agencés entre la partie 212 fixe et la partie 214 mobile.

Les moyens 250 d'étanchéité comportent une première surface 252 d'étanchéité associée à la partie 212 fixe et une deuxième surface 254 d'étanchéité associée à la partie 214 mobile, lesdites première et deuxième surfaces 252 et 254 d'étanchéité qui s'étendent radialement étant séparées axialement l'une de l'autre par un interstice 256.

Dans ce deuxième mode de réalisation, la première surface 252 d'étanchéité associée à la partie 212 fixe est portée par le plateau 240 fixe et est formée par la face supérieure de la partie 244 radiale supérieure dudit plateau qui est visible sur la figure 8.

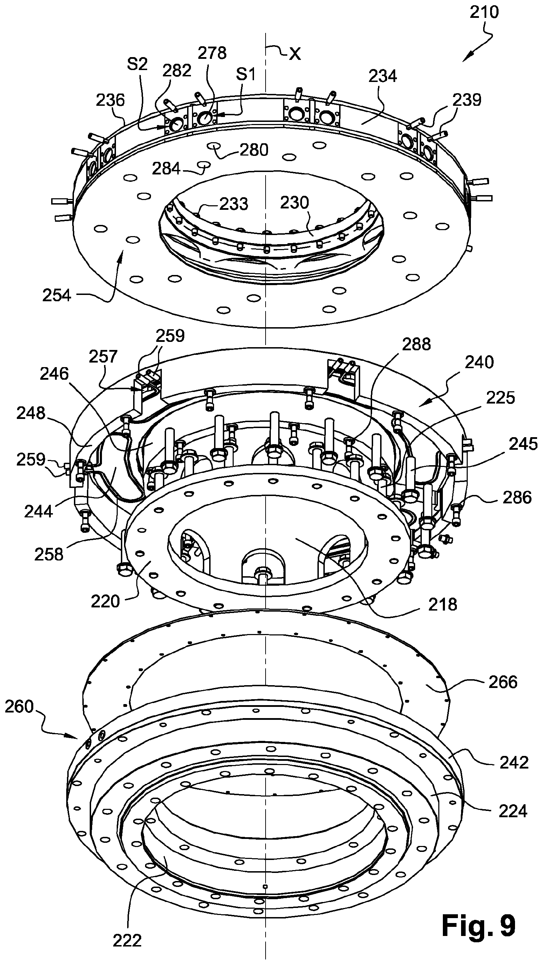

La deuxième surface 254 d'étanchéité associée à la partie 214 mobile est portée par le plateau 234 tournant et est formée par la face radiale inférieure dudit plateau 234 tournant qui est visible sur la figure 9.

Le plateau 240 fixe comporte des moyens 258 de chauffage qui sont agencés, globalement au centre, dans la partie 244 radiale supérieure du plateau 240 soit axialement en dessous de la première surface 252 d'étanchéité.

De préférence, les moyens 258 de chauffage sont formés par des résistances qui, comme les moyens 238 de chauffage, sont alimentées électriquement par des connecteurs 259 qui s'étendent radialement à l'extérieur à travers des ouvertures 257 ménagées pour leur passage dans la partie 248 axiale extérieure du plateau 240 fixe.

Le plateau 240 fixe en « U » inversé comporte centralement un évidement 255 qui est délimité d'une part axialement vers le haut par la partie 244 et vers le bas par l'entretoise 242 et, d'autre part, radialement vers l'intérieur par la partie 246 et vers l'extérieur par l'autre partie 248.

L'évidement 255 présente une forme annulaire comme notamment les plateaux 234, 240 et le volume correspondant à cet évidement 255 est rempli d'air qui forme un isolant.

Comme dans le premier mode de réalisation, le dispositif 210 de distribution comporte des moyens 260 de refroidissement qui sont associés aux moyens 250 d'étanchéité pour modifier la viscosité de la matière thermoplastique présente dans l'interstice 256 entre lesdites surfaces 252 et 254 d'étanchéité.

Les moyens 260 de refroidissement sont doublés en raison du double circuit de distribution du dispositif 210 de distribution.

Les moyens 260 de refroidissement comportent un premier circuit 262 de refroidissement associé au premier circuit de distribution reliant l'entrée E1 à au moins une sortie S1.

Les moyens 260 de refroidissement comportent un deuxième circuit 264 de refroidissement associé au deuxième circuit de distribution reliant l'entrée E2 à au moins une sortie S2.

Les moyens 260 de refroidissement sont réalisés dans l'entretoise 242 et les circuits 262, 264 de refroidissement sont fermés de manière étanche par une rondelle 266.

Des moyens d'étanchéité (non représentés) sont interposés axialement entre la rondelle 266 qui s'étend radialement et l'entretoise 242 et disposés de manière à isoler les circuits 262, 264 de refroidissement l'un de l'autre.

Le premier circuit 262 de refroidissement comporte au moins une première gorge 263 annulaire et les deuxième circuit 264 de refroidissement comporte au moins une deuxième gorge 265 annulaire, lesdites gorges 263, 265 étant respectivement réalisées dans la face radiale supérieure de l'entretoise 242.

La première gorge 263 du premier circuit 262 de refroidissement est agencée radialement à l'extérieur de la deuxième gorge 265 du deuxième circuit 264 de refroidissement.

Les moyens 260 de refroidissement utilisent un fluide de refroidissement, tel que de l'eau avec ou sans au moins un additif, qui est mis en circulation dans lesdits circuits 262 et 264 pour refroidir radialement l'intérieur et l'extérieur du plateau 240 fixe.

Dans ce deuxième mode de réalisation, les moyens 260 de refroidissement sont déportés axialement, ici vers le bas, par rapport aux moyens 250 d'étanchéité et au plateau 234 tournant et au plateau 240 fixe portant lesdites surfaces d'étanchéité 252 et 254.

Les moyens 260 de refroidissement ne sont pas intégrés à l'un et/ou l'autre desdits plateau 234 tournant et plateau 240 fixe.

Avantageusement, un tel agencement des moyens 260 de refroidissement permet de réduire l'encombrement général, en particulier axial, de chacun desdits plateaux 234, 240 ce qui participe à l'obtention d'un parcours de longueur réduite à l'intérieur du dispositif 210 de distribution.

Le dispositif 210 de distribution comporte des moyens 268 de rabattage pour ramener automatiquement la matière thermoplastique présente dans l'interstice 256 lorsque la partie 214 mobile est entraînée par rapport à la partie 212 fixe, soit dans ce deuxième mode de réalisation lorsque le plateau 234 tournant est entraîné en rotation relativement au plateau 240 fixe.

De préférence, les moyens 268 de rabattage sont réalisés dans la première surface 252 d'étanchéité portée par la partie 240 fixe.

Le dispositif 210 de distribution de type bi-matière comportant un double circuit de distribution, comme les moyens 260 de refroidissement qui sont doublés, les moyens 268 de rabattage sont également doublés.

Les moyens 268 de rabattage comportent des premiers moyens 270 de rabattage associés au premier circuit de distribution d'une matière thermoplastique et des deuxièmes moyens 272 de rabattage associés au deuxième circuit de distribution de l'autre matière thermoplastique.

Les premiers moyens 270 de rabattage sont conformés pour ramener la matière thermoplastique radialement de l'extérieur vers l'intérieur tandis que les deuxièmes moyens 272 de rabattage sont conformés pour ramener l'autre matière radialement de l'intérieur vers l'extérieur.

Tel qu'illustré par la figure 8, les premiers moyens 270 de rabattage et les deuxièmes moyens 272 de rabattage sont concentriques, les deuxièmes étant agencés radialement à l'intérieur des premiers.

Chacun des moyens 270, 272 de rabattage comporte deux spirales concentriques qui déterminent entre elles une piste annulaire de sorte que lesdits premier et deuxième circuits de distribution demeurent isolés l'un par rapport à l'autre, sans qu'aucun mélange entre les matières ne puissent se produire à l'intérieur du dispositif 210.

Les premiers moyens 270 de rabattage comportent au moins une spirale 269 radialement externe et une spirale radialement interne 271. Chacune des spirales 269 et 271 est conformée pour ramener la matière thermoplastique sur la première piste annulaire que lesdites spirales 269 et 271 délimitent radialement entre elles dans la première surface 252 d'étanchéité.

La spirale 269 externe va ramener automatiquement la matière thermoplastique radialement de l'extérieur vers l'intérieur tandis que la spirale 271 interne va ramener radialement ladite matière de l'intérieur vers l'extérieur.

De la même manière pour les deuxièmes moyens 272 de rabattage, la spirale 273 interne va ramener radialement ladite matière de l'intérieur vers l'extérieur tandis que la spirale 275 externe va ramener automatiquement la matière thermoplastique radialement de l'extérieur vers l'intérieur.

Comme pour les premiers moyens 270 de rabattage, les deuxièmes moyens 272 de rabattage vont ramener automatiquement l'autre ou deuxième matière thermoplastique sur la piste annulaire délimitée radialement par lesdites spirales 273, 275 respectivement.

Les deuxièmes moyens 258 de chauffage agencés au milieu de la partie 244 radiale, entre lesdites parties 246 et 248 axiales intérieure et extérieure, du plateau 240 fixe vont chauffer localement au voisinage des spirales 271 et 275 la partie de la matière thermoplastique présente dans l'interstice 256.

A l'opposé radialement des deuxièmes moyens 258 de chauffage et de part et d'autre, la matière thermoplastique présente dans l'interstice 256 va être respectivement refroidie par les moyens 260 de refroidissement pour en augmenter la viscosité afin de former un joint avec la matière elle-même.

Le premier circuit 262 de refroidissement va refroidir la matière thermoplastique venant au contact de la spirale 269 externe des premiers moyens 270 de rabattage afin d'en augmenter la viscosité.

Le refroidissement de la périphérie radiale externe de la partie 244 axiale du plateau 240 fixe est réalisé à travers la partie 248 axiale externe qui forme avantageusement un pont thermique entre cette zone et l'entretoise 242 comportant le premier circuit 262 de refroidissement.

Le deuxième circuit 264 de refroidissement va refroidir la matière thermoplastique venant au contact de la spirale 273 interne des deuxièmes moyens 272 de rabattage afin d'en augmenter la viscosité.

Le refroidissement de la périphérie radiale interne de la partie 244 axiale du plateau 240 fixe est réalisé à travers la partie 246 axiale interne qui forme avantageusement un pont thermique entre cette zone interne et l'entretoise 242 comportant le deuxième circuit 264 de refroidissement.

Grâce à un tel agencement, on obtient radialement un gradient de température entre la partie centrale de la partie 244 axiale du plateau 240 fixe associée aux deuxièmes moyens 258 de chauffage et chacune des extrémités externe et interne de ladite partie 244 axiale respectivement refroidies par le premier circuit 262 de refroidissement et le deuxième circuit 264 de refroidissement.

Le premier gradient de température est réalisé radialement du centre vers l'extérieur à travers la première piste de la première surface 252 pour augmenter la viscosité radialement vers l'extérieur et permettre à la spirale 269 externe de rabattre la matière thermoplastique radialement en sens opposé, vers l'intérieur grâce à quoi la matière thermoplastique ne s'échappe pas hors de l'interstice 256 et l'étanchéité du premier circuit de distribution obtenue.

De manière analogue pour le deuxième circuit de distribution de l'autre matière thermoplastique, un deuxième gradient de température est réalisé radialement du centre vers l'intérieur à travers la deuxième piste de la première surface 252 d'étanchéité.

Avantageusement, un tel gradient de température permet d'augmenter la viscosité radialement vers l'intérieur et à la spirale 273 interne de rabattre l'autre matière thermoplastique radialement en sens opposé, soit vers l'intérieur, afin que l'autre matière thermoplastique ne s'échappe pas radialement hors de l'interstice 256 et que l'étanchéité du deuxième circuit de distribution de cette autre matière thermoplastique soit assurée.

Grâce aux moyens 260 de refroidissement et aux moyens 268 de rabattage intervenant lorsque la partie 214 mobile est entraînée en rotation relativement à la partie 212 fixe, l'étanchéité d'au moins un, ici de deux, circuit du dispositif 210 de distribution est obtenue vis à vis de la matière thermoplastique circulant à l'intérieur.

La première matière thermoplastique est introduite radialement depuis l'extérieur par l'entrée E1 et, après un coude à angle droit, parcourt ensuite une rainure 274 en arc de cercle qui est ménagée dans le plateau 240 fixe et ouverte axialement vers le haut.

Une partie de la matière thermoplastique flue alors radialement dans l'interstice 256 des moyens 250 d'étanchéité, plus précisément sur la première piste, pour assurer l'étanchéité du premier circuit de distribution tel qu'expliqué précédemment.

L'autre partie de la matière thermoplastique remonte quand à elle axialement vers le haut dans le plateau 234 tournant jusqu'à la sortie S1.

Le plateau 234 tournant comporte un conduit 278 de sortie qui est représenté sur la figure 10, ledit conduit 278 comporte un tronçon radial et un tronçon axial qui sont reliés entre eux ici par un coude à angle droit.

L'extrémité du conduit 278 qui débouche radialement constitue ladite sortie S1. L'autre extrémité débouche axialement dans la deuxième surface 254 d'étanchéité par un orifice 280 par lequel pénètre dans le conduit 278 la matière thermoplastique provenant du plateau 240 fixe et ayant traversée les moyens 250 d'étanchéité.

Selon l'une des caractéristiques du dispositif 210 de distribution, le dispositif 210 comporte un deuxième circuit de distribution d'une autre matière thermoplastique introduite par l'entrée E2 et qui est distribuée par la sortie S2.

Le parcours de la deuxième matière dans le dispositif 210 est similaire à celui qui vient d'être décrit, introduite radialement depuis l'extérieur par l'entrée E2 la matière traverse le plateau 240 fixe jusqu'à sortir axialement vers le haut par une rainure 276 en arc de cercle, traverse axialement l'interstice 256 des moyens 250 d'étanchéité jusqu'à pénétrer axialement dans un conduit 282 du plateau 234 tournant (analogue au conduit 278) par un orifice 284.

Tel qu'expliqué précédemment, une partie de la deuxième matière thermoplastique va fluer dans l'interstice 256 au niveau de la deuxième piste délimitée par les deuxièmes moyens 272 de rabattage afin d'assurer l'étanchéité du deuxième circuit de distribution de ladite deuxième matière, l'étanchéité entre le plateau 240 fixe et le plateau 234 tournant.

Selon une autre caractéristique, le dispositif 210 de distribution alimente simultanément en matière thermoplastique, à partir d'une entrée telle que l'entrée E1, au moins une première sortie S1 et une deuxième sortie S'1.

Le dispositif 210 de distribution comporte au moins une rainure 274 qui s'étend circonférentiellement pour alimenter à partir d'une entrée E1 au moins deux conduits radiaux de distribution, tels que le conduit 278, qui sont circonférentiellement consécutifs.

Avantageusement, le deuxième circuit de distribution permet également une distribution simultanée de matière à plus d'une sortie, l'autre matière introduite par l'entrée E2 étant distribuée par la rainure 276 vers au moins une première sortie S2 et une deuxième sortie S'2.

Avantageusement, le premier circuit 262 de refroidissement comporte des rondelles 286 qui sont montées autour des moyens de liaison, tels que des colonnettes, reliant axialement la partie 248 axiale extérieure du plateau 240 fixe à l'entretoise 242.

Les rondelles 286 sont interposées axialement entre la face radiale inférieure de l'extrémité libre de la partie 248 axiale extérieure du plateau 240 fixe et la face radiale supérieure de la rondelle 266 couvrant l'entretoise 242.

De préférence, des rondelles 288 sont également interposées axialement de manière similaire entre la partie 246 axiale intérieure du plateau 240 fixe et l'entretoise 242.

Avantageusement, les rondelles 286 et 288 participent au contrôle du pont thermique établi entre l'entretoise 242 comportant lesdits circuits 262, 264 de refroidissement et les périphéries radiales externe et interne de la partie 244 du plateau 240 fixe comportant la première surface 252 d'étanchéité.

Avantageusement, le volume d'air présent dans l'évidement 255 forme un isolant qui participe également à établir le pont thermique entre les moyens 260 de refroidissement et le plateau 240 fixe.

En variante non représentée, les moyens 260 de refroidissement sont intégrés à l'un et/ou l'autre desdits plateau 234 tournant et plateau 240 fixe.

De préférence, les moyens 260 de refroidissement sont associés à celle desdites partie 214 mobile ou partie 212 fixe, par exemple lesdits plateau 234 tournant ou plateau 240 fixe, comportant lesdits moyens 268 de rabattage.

En variante non représentée, le dispositif 210 de distribution comporte des moyens de dépressurisation pour contrôler la pression exercée par la matière thermoplastique à l'intérieur du dispositif de distribution.

En variante non représentée, le dispositif 210 de distribution comporte des moyens de purge, lesdits moyens de purge formant avantageusement les moyens de dépressurisation.

## Revendications

1. Dispositif (10, 210) de distribution de matière thermoplastique à une machine de moulage de préformes destinées à la fabrication de récipients, ledit dispositif (10, 210) comportant au moins une partie (12, 212) fixe et une partie (14, 214) mobile qui est entrainée en rotation par rapport à ladite partie (12, 212) fixe autour d'un axe (X) du dispositif et comportant des moyens (50, 250) d'étanchéité agencés entre au moins la partie (12, 212) fixe comportant au moins une entrée (E) d'alimentation relié à une source d'alimentation en matière thermoplastique et la partie (14, 214) mobile comportant au moins une sortie (S) de distribution de ladite matière thermoplastique vers des unités de ladite machine de moulage de préformes,
**caractérisé en ce que** lesdits moyens (50, 250) d'étanchéité comportent une première surface (52, 252) d'étanchéité solidaire de la partie (12, 212) fixe et une deuxième surface (54, 254) d'étanchéité liée en déplacement à la partie (14, 214) mobile qui s'étendent radialement, lesdites première et deuxième surfaces d'étanchéité étant séparées axialement l'une de l'autre par un interstice (56, 256) dans lequel flue une partie de la matière thermoplastique en circulation, au moins l'une desdites première et deuxième surfaces (52, 54, 252, 254) d'étanchéité comportant des moyens (58, 268) de rabattage pour ramener radialement la matière thermoplastique lorsque la partie (14, 214) mobile est entraînée par rapport à la partie (12, 212) fixe et **en ce que** lesdits moyens (50, 250) d'étanchéité comportent au moins des moyens (60, 260) de refroidissement associés pour obtenir radialement un gradient de température dans au moins l'une desdites première et deuxième surfaces (52, 54, 252, 254) d'étanchéité afin d'augmenter la viscosité de ladite matière thermoplastique située entre lesdites surfaces (52, 54, 252, 254) d'étanchéité.

2. Dispositif selon la revendication 1, **caractérisé en ce que** lesdits moyens (60, 260) de refroidissement comportent au moins un circuit de refroidissement associé auxdits moyens (50, 250) d'étanchéité pour maintenir la matière thermoplastique située radialement en périphérie du joint à une température (Tc) de consigne déterminée qui est inférieure à la température (Tf) de fusion de la matière thermoplastique.

3. Dispositif selon l'une des revendications 1 ou 2, **caractérisé en ce que** les moyens (58, 268) de rabattage sont constitués par au moins une spirale ménagée dans l'une desdites surfaces (52, 54, 252, 254) d'étanchéité

4. Dispositif selon l'une quelconque des revendications 1 à 3, **caractérisé en ce que** le dispositif comporte des moyens (90) de dépressurisation pour contrôler la pression exercée par la matière thermoplastique à l'intérieur du dispositif de distribution.

5. Dispositif selon l'une quelconque des revendications 1 à 4, **caractérisé en ce que** le dispositif comporte des moyens (122) de purge pour purger au moins une partie de la matière thermoplastique présente à l'intérieur dudit dispositif.

6. Dispositif selon l'une quelconque des revendications précédentes, **caractérisé en ce que** le dispositif comporte des moyens de chauffage disposés dans des zones déterminées à l'intérieur du dispositif pour chauffer la matière thermoplastique afin de maintenir ladite matière thermoplastique à une température (T) supérieure ou égale à la température (Tf) de fusion.

7. Dispositif selon l'une quelconque des revendications précédentes, **caractérisé en ce que** le dispositif (10, 210) comporte au moins des moyens (120, 238, 258) de chauffage qui, associés aux moyens (50, 250) d'étanchéité, sont disposés à proximité de l'une au moins desdites surfaces (52, 54, 252, 254) d'étanchéité pour chauffer une partie de la matière thermoplastique présente dans l'interstice (56, 256).

8. Dispositif selon la revendication 5, **caractérisé en ce que** le dispositif comporte des moyens d'assistance à la purge aptes à introduire un fluide sous pression, dans le sens opposé à celui de la circulation de la matière thermoplastique à l'intérieur du dispositif, pour faciliter l'évacuation de la matière thermoplastique lors d'une opération de purge.

9. Dispositif selon l'une quelconque des revendications précédentes, **caractérisé en ce que** le dispositif comporte un organe formant plongeur qui est introduit sélectivement pour réduire localement la section de la partie de la matière thermoplastique.

10. Dispositif selon l'une quelconque des revendications précédentes, **caractérisé en ce que** ledit dispositif de conception générale en « O » comporte centralement un passage axial.

11. Dispositif selon l'une quelconque des revendications précédentes, **caractérisé en ce que** le dispositif comporte au moins un circuit de distribution alimentant simultanément à partir d'une entrée au moins deux canaux radiaux de distribution qui sont circonférentiellement consécutifs.

12. Dispositif selon l'une quelconque des revendications précédentes, **caractérisé en ce que** le dispositif comporte un double circuit de distribution de matière thermoplastique, respectivement au moins un premier circuit de distribution d'une matière thermoplastique et un deuxième circuit de distribution d'une autre matière thermoplastique.

## Patentansprüche

1. Vorrichtung (10, 210) zur Ausgabe von thermoplastischem Stoff an eine Formmaschine von Vorformlingen, die zur Herstellung von Behältern bestimmt sind, wobei die Vorrichtung (10, 210) mindestens einen ortsfesten Teil (12, 212) und einen beweglichen Teil (14, 214) aufweist, der bezüglich des ortsfesten Teils (12, 212) um eine Achse (X) der Vorrichtung in Drehung versetzt wird, und Dichtungseinrichtungen (50, 250) aufweist, die zwischen mindestens dem ortsfesten Teil (12, 212), der mindestens eine Versorgungsöffnung (E) aufweist, die mit einer Versorgungsquelle mit thermoplastischem Stoff verbunden ist, und dem beweglichen Teil (14, 214) angeordnet sind, der mindestens einen Ausgang (S) zur Ausgabe des thermoplastischen Stoffs an Einheiten der Formmaschine von Vorformlingen aufweist,
**dadurch gekennzeichnet, dass** die Dichtungseinrichtungen (50, 250) eine fest mit dem ortsfesten Teil (12, 212) verbundene erste Dichtungsfläche (52, 252) und eine in Verschiebung mit dem beweglichen Teil (14, 214) verbundene zweite Dichtungsfläche (54, 254) aufweisen, die sich radial erstrecken, wobei die erste und die zweite Dichtungsfläche axial voneinander durch einen Zwischenraum (56, 256) getrennt sind, in dem ein Teil des zirkulierenden thermoplastischen Stoffs fließt, wobei mindestens eine der ersten und zweiten Dichtungsflächen (52, 54, 252, 254) Umbördelungseinrichtungen (58, 268) aufweist, um den thermoplastischen Stoff radial zurückzuführen, wenn der bewegliche Teil (14, 214) bezüglich des ortsfesten Teils (12, 212) angetrieben wird, und dass die Dichtungseinrichtungen (50, 250) mindestens zugeordnete Kühleinrichtungen (60, 260) aufweisen, um radial einen Temperaturgradienten in mindestens einer der ersten und zweiten Dichtungsflächen (52, 54, 252, 254) zu erhalten, um die Viskosität des zwischen den Dichtungsflächen (52, 54, 252, 254) befindlichen thermoplastischen Stoffs zu erhöhen.

2. Vorrichtung nach Anspruch 1, **dadurch gekennzeichnet, dass** die Kühleinrichtungen (60, 260) mindestens einen den Dichtungseinrichtungen (50, 250) zugeordneten Kühlkreislauf aufweisen, um den radial am Umfang der Dichtung befindlichen thermoplastischen Stoff auf einer bestimmten Solltemperatur (Tc) zu halten, die niedriger ist als die Schmelztemperatur (Tf) des thermoplastischen Stoffs.

3. Vorrichtung nach einem der Ansprüche 1 oder 2, **dadurch gekennzeichnet, dass** die Umbördelungseinrichtungen (58, 268) aus mindestens eine Spirale bestehen, die in einer der Dichtungsflächen (52, 54, 252, 254) angeordnet ist.

4. Vorrichtung nach einem der Ansprüche 1 bis 3, **dadurch gekennzeichnet, dass** die Vorrichtung Druckentlastungseinrichtungen (90) aufweist, um den vom thermoplastischen Stoff im Inneren der Ausgabevorrichtung ausgeübten Druck zu kontrollieren.

5. Vorrichtung nach einem der Ansprüche 1 bis 4, **dadurch gekennzeichnet, dass** die Vorrichtung Entleerungseinrichtungen (122) aufweist, um mindestens einen Teil des im Inneren der Vorrichtung vorhandenen thermoplastischen Stoffs zu entleeren.

6. Vorrichtung nach einem der vorhergehenden Ansprüche, **dadurch gekennzeichnet, dass** die Vorrichtung Heizeinrichtungen aufweist, die in bestimmten Bereichen im Inneren der Vorrichtung angeordnet sind, um den thermoplastischen Stoff zu erwärmen, um den thermoplastische Stoff auf einer Temperatur (T) zu halten, die höher als die oder gleich der Schmelztemperatur (Tf) ist.

7. Vorrichtung nach einem der vorhergehenden Ansprüche, **dadurch gekennzeichnet, dass** die Vorrichtung (10, 210) mindestens Heizeinrichtungen (120, 238, 258) aufweist, die den Dichtungseinrichtungen (50, 250) zugeordnet in der Nähe mindestens der Dichtungsflächen (52, 54, 252, 254) angeordnet sind, um einen Teil des im Zwischenraum (56, 256) vorhandenen thermoplastischen Stoffs zu erwärmen.

8. Vorrichtung nach Anspruch 5, **dadurch gekennzeichnet, dass** die Vorrichtung Entleerungshilfeeinrichtungen aufweist, die ein Druckfluid in der Richtung einführen können, die derjenigen der Zirkulation des thermoplastischen Stoffs im Inneren der Vorrichtung entgegengesetzt liegt, um das Entfernen des thermoplastischen Stoffs bei einem Entleerungsvorgang zu erleichtern.

9. Vorrichtung nach einem der vorhergehenden Ansprüche, **dadurch gekennzeichnet, dass** die Vorrichtung ein einen Tauchkolben bildendes Organ aufweist, das selektiv eingeführt wird, um lokal den Querschnitt des Teils des thermoplastischen Stoffs zu verringern.

10. Vorrichtung nach einem der vorhergehenden Ansprüche, **dadurch gekennzeichnet, dass** die allgemein "O"-förmig gestaltete Vorrichtung zentral einen axialen Durchgang aufweist.

11. Vorrichtung nach einem der vorhergehenden Ansprüche, **dadurch gekennzeichnet, dass** die Vorrichtung mindestens einen Ausgabekreis aufweist, der ausgehend von einem Eingang gleichzeitig mindestens zwei radiale Ausgabekanäle versorgt, die in Umfangsrichtung aufeinander folgen.

12. Vorrichtung nach einem der vorhergehenden Ansprüche, **dadurch gekennzeichnet, dass** die Vorrichtung einen doppelten Ausgabekreis von thermoplastischem Stoff aufweist, je mindestens einen ersten Ausgabekreis eines thermoplastischen Stoffs und einen zweiten Ausgabekreis eines anderen thermoplastischen Stoffs.

## Claims

1. Device (10, 210) for dispensing thermoplastic material to a machine for moulding preforms intended for manufacturing containers, said device (10, 210) having at least a fixed part (12, 212) and a movable part (14, 214) that is driven in rotation with respect to said fixed part (12, 212) about an axis (X) of the device, and having sealing means (50, 250) arranged between at least the fixed part (12, 212), which has at least one supply inlet (E) connected to a source for supplying thermoplastic material, and the movable part (14, 214), which has at least one outlet (S) for dispensing said thermoplastic material towards units of said machine for moulding preforms,
**characterized in that** said sealing means (50, 250) have a first sealing surface (52, 252) secured to the fixed part (12, 212) and a second sealing surface (54, 254) linked in terms of movement to the movable part (14, 214), which extend radially, said first and second sealing surfaces being axially separated from one another by a gap (56, 256) in which a part of the circulating thermoplastic material flows, at least one of said first and second sealing surfaces (52, 54, 252, 254) having redirecting means (58, 268) for radially returning the thermoplastic material when the movable part (14, 214) is driven with respect to the fixed part (12, 212), and **in that** said sealing means (50, 250) have at least associated cooling means (60, 260) for obtaining radially a temperature gradient in at least one of said first and second sealing surfaces (52, 54, 252, 254) in order to increase the viscosity of said thermoplastic material situated between said sealing surfaces (52, 54, 252, 254) .

2. Device according to Claim 1, **characterized in that** said cooling means (60, 260) have at least one cooling circuit associated with said sealing means (50, 250) for keeping the thermoplastic material situated radially at the periphery of the seal at a given setpoint temperature (Tc) that is lower than the melting temperature (Tf) of the thermoplastic material.

3. Device according to either of Claims 1 and 2, **characterized in that** the redirecting means (58, 268) are made up of at least one spiral formed in one of said sealing surfaces (52, 54, 252, 254).

4. Device according to any one of Claims 1 to 3, **characterized in that** the device has depressurization means (90) for controlling the pressure exerted by the thermoplastic material inside the dispensing device.

5. Device according to any one of Claims 1 to 4, **characterized in that** the device has purging means (122) for purging at least a part of the thermoplastic material present inside said device.

6. Device according to any one of the preceding claims, **characterized in that** the device has heating means disposed in given zones inside the device for heating the thermoplastic material in order to keep said thermoplastic material at a temperature (T) greater than or equal to the melting temperature (Tf).

7. Device according to any one of the preceding claims, **characterized in that** the device (10, 210) has at least heating means (120, 238, 258) which, associated with the sealing means (50, 250), are disposed close to at least one of said sealing surfaces (52, 54, 252, 254) in order to heat a part of the thermoplastic material present in the gap (56, 256).

8. Device according to Claim 5, **characterized in that** the device has purge assistance means that are able to introduce a pressurized fluid, in the opposite direction to that of the circulation of the thermoplastic material inside the device, in order to make it easier to evacuate the thermoplastic material during a purging operation.

9. Device according to any one of the preceding claims, **characterized in that** the device has a member forming a plunger, which is introduced selectively in order to locally reduce the cross-section of the part of the thermoplastic material.

10. Device according to any one of the preceding claims, **characterized in that** said device of O-shaped overall design centrally has an axial passage.

11. Device according to any one of the preceding claims, **characterized in that** the device has at least one dispensing circuit that simultaneously supplies from an inlet at least two circumferentially consecutive radial dispensing ducts.

12. Device according to any one of the preceding claims, **characterized in that** the device has a double dispensing circuit for thermoplastic material, namely at least a first dispensing circuit for one thermoplastic material and a second dispensing circuit for another thermoplastic material, respectively.
